# EUROPÄISCHE PATENTSCHRIFT

(11) **EP 3 039 072 B1**
(45) Veröffentlichungstag und Bekanntmachung des Hinweises auf die Patenterteilung: **10.10.2018**
(21) Anmeldenummer: 14766670.5
(22) Anmeldetag: 26.08.2014
(51) Int. Cl.: C08L 25/12, C08L 51/04

(54) **STYROL-COPOLYMER-ZUSAMMENSETZUNGEN MIT VERBESSERTEM GLANZ**
STYRENE COPOLYMER COMPOSITIONS HAVING AN IMPROVED GLOSS
COMPOSITIONS DE COPOLYMÈRE STYRÈNE À BRILLANCE AMÉLIORÉE

(30) Priorität: 27.08.2013 EP 13181799
(43) Veröffentlichungstag der Anmeldung: 06.07.2016
(73) Patentinhaber: INEOS Styrolution Group GmbH, 60325 Frankfurt am Main (DE)
(72) Erfinder: NIESSNER, Norbert, 67159 Friedelsheim (DE); BÖCKMANN, Philipp, 67098 Bad Dürkheim (DE); STAAL, Maarten, 67117 Limburgerhof (DE); MINKWITZ, Rolf, 68167 Mannheim (DE)
(74) Vertreter: Jacobi, Markus Alexander
(86) Internationale Anmeldenummer: PCT/EP2014/068037
(87) Internationale Veröffentlichungsnummer: WO 2015/028449

(56) Entgegenhaltungen:
- DE-A1- 4 132 497
- DE-A1- 10 153 386

## Beschreibung

Die vorliegende Erfindung betrifft thermoplastische Zusammensetzungen, die mindestens ein Styrol-Copolymer und mindestens eine Kautschuk-Komponente enthalten. Gegenstand sind auch Acrylat-Styrol-Acrylnitril (ASA) Copolymer-Zusammensetzungen und ein Verfahren zur Herstellung dieser Copolymer-Zusammensetzungen mit verbessertem Glanz und verbesserter UV-Witterungsstabilität.

Thermoplastische Zusammensetzungen enthalten oftmals Pfropfkautschuke als Schlagzäh-Modifizierer, siehe z. B. DE-A 1260135 und DE-A 2311129. Enthält eine Zusammensetzung Styrol-Copolymere, insbesonder Styrol-Acrylnitril-Copolymere (SAN), so nimmt die Wirksamkeit der Pfropf-copolymere bezüglich ihrer schlagzähmodifizierenden Wirkung mit zunehmender Größe der Pfropfcopolymere zu. Bei Einsatz von kleinteiligen Pfropfkautschuken besteht auch das Problem, dass die Zähigkeit der schlagzähmodifizierenden Massen stark von der Verarbeitungstemperatur abhängt. Polymer-Zusammensetzungen mit verbesserter Schlagzähigkeit bei gleichbleibend guter Einfärbbarkeit können durch Mischen einer großteiligen zu einer kleinteiligen Kautschuk-Komponente (bimodale Kautschukteilchen) erhalten werden, wie in DE-A 2826925 beschrieben.

Die Eigenschaften von ASA-Copolymeren können verbessert werden, wenn die polymere "Weichphase", also die Pfropf-Komponente, einen Vernetzer enthält. Unter Vernetzern versteht man mindestens bi-funktionale monomere Verbindungen mit mindestens zwei reaktiven, ungesättigten Gruppen, insbesondere C=C-Doppelbindungen. Die Vernetzer können cyclisch oder nicht-cyclisch sein. So beschreibt US 4,876,313 sogenannte "core-shell" Polymere, erhältlich via Emulsionspolymerisation mit Vernetzer. Als "core-monomer" werden bevorzugt Alkyl(meth)acrylate oder Styrol und als "shellmonomer" wird bevorzugt Methylmethacrylat und Methacrylsäure eingesetzt. Unter den nicht-cyclischen Vernetzern wird oft das nachfolgende Allyl(meth)acrylat (AMA) in einer Menge von 1 -10 Gew.-% eingesetzt.

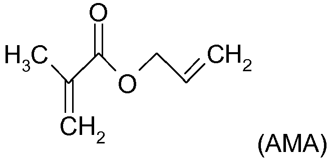

Auch die Verwendung von cyclischen Vernetzern, wie z. B. des handelsüblichen, bicyclischen Dicyclopentadienylacrylats (DCPA; Acrylat des Tricyclodecenylalkohols) ist bekannt, es wird in einer Menge von 0,5-5 Gew % eingesetzt.

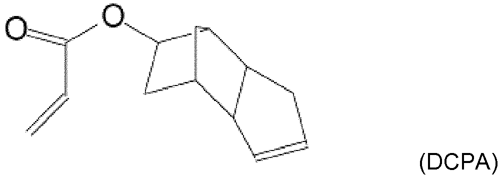

Schlagzähe, mehrphasige Emulsions-Copolymere vom ASA-Typ haben ein besonders ausgewogenes Eigenschaftsprofil, wenn die Acrylester-Weichphase (Kautschuk-Komponente), z.B. aus Butylacrylat, einen Vernetzer enthält. EP-A 0535456 beschreibt eine thermoplastische Formmasse mit verbesserter Schlagzähigkeit enthaltend ein Styrol/Acrylnitril-Copolymer (Hartphase) und ein mehrschaliges Pfropfcopolymer, wovon der Kern und die erste Pfropfhülle mit 0,1 bis 10 Gew.-% eines cyclischen Vernetzers, insbesondere Dicyclopentadienylacrylat (DCPA), vernetzt sind.

In DE-A 4006643 wird eine thermoplastische Formmasse aus einem Styrol/Acrylnitril-Copolymer oder einem α-Methylstyrol-Acrylnitril-Copolymer und einem teilchenförmigen Pfropfcopolymer beschrieben. Die Pfropfgrundlage ist ein vernetzter Acrylatkautschuk mit einer Partikelgröße von 30 bis 1000 nm. Als Vernetzer werden mehrere ungesättigte Monomeren aufgeführt. Bevorzugter und ausschließlich eingesetzter Vernetzer ist der Acrylsäureester des Tricyclodecenylalkohols (DCPA). Die Menge des Vernetzers beträgt 0,1 bis 5 Gew.-%.

Der genannte Stand der Technik zeigt, dass die Vernetzer in unterschiedlichen Mengen enthalten sein bzw. eingesetzt werden können. Die im Stand der Technik genannten Vernetzer können bei ASA-Formmassen mit unterschiedlichen Teilchengrößen bislang nur mit deutlichen Abstrichen bei wichtigen Eigenschaften, wie Glanz und Gelbton eingesetzt werden. DE-A 2826925 beschreibt eine schlagzähe thermoplastische Masse mit guter Einfärbbarkeit, bestehend aus einem Pfropfmischpolymer (Weichphase) und einer Hartkomponente aus SAN-Copolymer.

Die Erfindung betrifft die Bereitstellung von verbesserten thermoplastischen Copolymer-Zusammensetzungen, die auch bei Aussenanwendungen bzw. Bewitterung einen geringen Gelbwert und einen guten Glanz aufweisen.

Die vorliegende Erfindung betrifft thermoplastischen Copolymer-Zusammensetzungen enthaltend (oder bestehend aus) die folgenden Komponenten:
50-82 Gew.-% eines SAN-Copolymeren A1, aufgebaut aus:
   A11 60 bis 70 Gew.-% eines ggf. substituierten Styrols,
   A12 30 bis 35 Gew.-% Acrylnitril,
   A13 0 bis 10 Gew. % eines weiteren, copolymerisierbaren Monomeren;
mindestens 15 Gew.-% eines Pfropfcopolymeren A2 mit einer mittleren Teilchengröße von 50 bis 150 nm, aufgebaut aus:
   A21 60-80 Gew.-% mindestens einer kautschukartigen Pfropfbasis mit einer Glasübergangstemperatur Tg < 0 °C aus:
      A211 80-99 Gew.-% mindestens eines C2-C4-Alkylacrylats
      A212 0,5-2,5 Gew.-% des cyclischen Vernetzers Dicyclopentadienylacrylat (V1)
      A213 0,1-2,0 Gew.- % eines nicht-cyclischen, mindestens zwei funktionelle Gruppen enthaltenden weiteren Vernetzers (V2)
      A214 0 bis 18 Gew.-% eines weiteren copolymerisierbaren Monomeren;
   A22 20-40 Gew.-% mindestens einer Pfropfhülle, bestehend aus:
      A221 71 bis 80 Gew.-% eines ggf. substituierten Styrols
      A222 20 bis 29 Gew.-% Acrylnitril
      A223 0 bis 9 Gew.-% eines weiteren, copolymerisierbaren Monomeren;
0-5 Gew.-%, oftmals 0,5 - 5 Gew.-%, an Hilfsstoffen und/oder Zusatzstoffen C.

Die Gew.-% beziehen sich in der Regel auf die Gesamtzusammensetzung. Oftmals haben die Pfropfcopolymere A2 eine mittlere Teilchengröße von 80 bis 115 nm.

Die genannten thermoplastischen Copolymer-Zusammensetzungen, aber auch die nachfolgend genannten, können auch mehrere SAN-Komponenten (A1) und mehrere Pfropfcopolymer-Komponenten enthalten. Sie weisen einen verbesserten Glanz, insbesondere nach Bewitterung, und einen verbesserten Gelbwert, insbesondere nach Bewitterung auf.

Die vorliegende Erfindung betrifft ferner die Bereitstellung von verbesserten thermoplastischen Copolymer-Zusammensetzungen, enthaltend (oder bestehend aus) die folgenden Komponenten:
50-92 Gew.-% eines SAN-Copolymeren A1, aufgebaut aus:
   A11 60 bis 70 Gew.-% eines ggf. substituierten Styrols,
   A12 30 bis 35 Gew.-% Acrylnitril,
   A13 0 bis 10 Gew. % eines weiteren, copolymerisierbaren Monomeren;
10-35 Gew.-% eines Pfropfcopolymeren B2 mit einer mittleren Teilchengröße von 420 bis 590 nm, aufgebaut aus:
   B21 60-80 Gew.-% mindestens einer kautschukartigen Pfropfbasis mit einer Glasübergangstemperatur Tg < 0 °C aus:
   B211 80-99 Gew.-% mindestens eines C2-C4-Alkylacrylats
   B212 0,5 -2,5 Gew.-% des cyclischen Vernetzers Dicyclopentadienylacrylat (V1)
   B213 0,1 bis 2,0 Gew.- % eines nicht-cyclischen, mindestens zwei funktionelle Gruppen enthaltenden weiteren Vernetzers (V2)
   B214 0 bis 18 Gew.-% eines weiteren copolymerisierbaren Monomeren;
   B22 20-40 Gew.-% mindestens einer Pfropfhülle, bestehend aus:
   B221 71 bis 80 Gew.-% eines ggf. substituierten Styrols
   B222 20 bis 29 Gew.-% Acrylnitril
   B223 0 bis 9 Gew.-% eines weiteren, copolymerisierbaren Monomeren;
0-5 Gew.-%, oftmals 0,5-5 Gew.-%, an Hilfsstoffen und/oder Zusatzstoffen C.

Oftmals haben die Pfropfcopolymere B2 eine mittlere Teilchengröße von 450-550 nm.

Die vorliegende Erfindung betrifft die Bereitstellung von verbesserten thermoplastischen Copolymer-Zusammensetzungen, enthaltend mindestens zwei verschiedene Pfrofcopolymere A2 und B2. Dabei können zwei getrennt hergestellte Pfropfcopolymere A2 und B2 eingesetzt werden, die jeweils aus einer vernetzten Acrylester-Pfropfgrundlage und einer Hülle aus Acrylnitril/Styrol-Copolymeren bestehen, wobei die mittlere Teilchengröße des ersten Pfropfcopolymeren (A2) vorzugsweise 80 bis 115 nm und die des zweiten Pfropfcopolymeren (B2) 450 bis 550 nm beträgt. Bevorzugt eingesetzte Vernetzer der jeweiligen Pfropfgrundlage sind DCPA und AMA.

Diese Zusammensetzungen enthalten (oder bestehend aus) die folgenden Komponenten:
50-82 Gew.-% eines SAN-Copolymeren A1, aufgebaut aus 60 bis 70 Gew.-% Styrol sowie 30 bis 40 Gew.-% Acrylnitril, vorzugsweise 60 bis 65 Gew.-% Styrol sowie 30 bis 35 Gew.-% Acrylnitril;
10-30 Gew.-% eines Pfropfcopolymeren A2 mit einer mittleren Teilchengröße von 50 bis 150 nm, oftmals 80 bis 115 nm, aufgebaut aus:
   A21 60-80 Gew.-% mindestens einer kautschukartigen Pfropfbasis mit einer Glasübergangstemperatur Tg < 0 °C aus:
      A211 bis zu 99 Gew.-% mindestens eines C4-Alkylacrylats
      A212 0,5-2,2 Gew.-% cyclischen Vernetzers Dicyclopentadienylacrylat (V1)
      A213 0,1 bis 0,9 Gew.- % eines nicht-cyclischen, mindestens zwei funktionelle Gruppen enthaltenden weiteren Vernetzers (V2)
      A214 0 bis 5 Gew.-% eines weiteren copolymerisierbaren Monomeren;
   A22 20-40 Gew.-% mindestens einer Pfropfhülle, bestehend aus:
      A221 71 bis 80 Gew.-% Styrol
      A222 20 bis 29 Gew.-% Acrylnitril;
5-20 Gew.-% eines Pfropfcopolymeren B2 mit einer mittleren Teilchengröße von 420 bis 590 nm, oftmals 450 bis 550 nm, aufgebaut aus:
   B21 60-80 Gew.-% mindestens einer kautschukartigen Pfropfbasis mit einer Glasübergangstemperatur Tg < 0 °C aus:
      B211 bis zu 99 Gew.-% mindestens eines C4-Alkylacrylats
      B212 0,5-2,2 Gew.-% cyclischen Vernetzers Dicyclopentadienylacrylat (V1)
      8213 0,1 bis 0,9 Gew.-% eines nicht-cyclischen, mindestens zwei funktionelle Gruppen enthaltenden weiteren Vernetzers (V2)
      B214 0 bis 5 Gew.-% eines weiteren copolymerisierbaren Monomeren;
   B22 20-40 Gew.-% mindestens einer Pfropfhülle, bestehend aus:
      B221 71 bis 80 Gew.-% Styrol
      B222 20 bis 29 Gew.-% Acrylnitril;
0-5 Gew.-%, oftmals 0,5-5 Gew.-%, an Hilfsstoffen und/oder Zusatzstoffen C.

Gegenstand dieser Erfindung ist auch eine thermoplastische Copolymer-Zusammensetzung, wie oben beschrieben, enthaltend mindestens ein Pfropfcopolymer A2 oder B2, hergestellt unter Einsatz des cyclischen Vernetzers Dicyclopentadienylacrylat (V1) und des nicht-cyclischen Vernetzers Allylmethacrylat (V2).

Gegenstand dieser Erfindung ist auch eine thermoplastische Copolymer-Zusammensetzung, wie oben beschrieben, enthaltend mindestens ein Pfropfcopolymer A2 und mindestens ein Pfropfcopolymer B2, jeweils hergestellt unter Einsatz des cyclischen Vernetzers Dicyclopentadienylacrylat (V1) und des nicht-cyclischen Vernetzers Allylmethacrylat (V2).

Gegenstand dieser Erfindung ist auch eine thermoplastische Copolymer-Zusammensetzung, wie oben beschrieben, enthaltend (oder bestehend aus):
mindestens 65 Gew.-% eines SAN-Copolymeren A1 aus Styrol und Acrylnitril;
mindestens 18 Gew.-% eines Pfropfcopolymeren A2 mit einer mittleren Teilchengröße von
   50 bis 150 nm, oftmals 80 bis 115 nm, basierend auf einem Butylacrylat-Kautschuk; 10-15 Gew.-% eines Pfropfcopolymeren B2 mit einer mittleren Teilchengröße von
   420 bis 590 nm, oft 450-550 nm, basierend auf einem Butylacrylat-Kautschuk;
0,5-5 Gew.-% an Hilfsstoffen und/oder Zusatzstoffen C.

Gegenstand dieser Erfindung ist auch eine thermoplastische Copolymer-Zusammensetzung, wie oben beschrieben, bei der als Komponente A1 ein SAN-Copolymer mit einem Styrol-Gehalt von 65 Gew.-% und einem Acrylnitril-Gehalt von 35 Gew.-% eingesetzt wird, und das SAN-Copolymer eine mittlere Molmasse Mw von 120.000 bis 180.000 g/Mol aufweist.

Gegenstand dieser Erfindung ist auch eine thermoplastische Copolymer-Zusammensetzung, wie oben beschrieben, enthaltend (oder bestehend aus):
mindestens 65 Gew.-% eines SAN-Copolymeren A1 aus Styrol (65) und Acrylnitril (35);
18-22 Gew.-% eines Pfropfcopolymeren A2 mit einer mittleren Teilchengröße von 50 bis150 nm, oftmals 80-115 nm, basierend auf einem Butylacrylat-Kautschuk, hergestellt unter Einsatz des cyclischen Vernetzers Dicyclopentadienylacrylat (V1) und des nicht-cyclischen Vernetzers Allylmethacrylat (V2);
10-15 Gew.-% eines Pfropfcopolymeren B2 mit einer mittleren Teilchengröße von 420 bis 590 nm, oftmals 450-550 nm basierend auf einem Butylacrylat-Kautschuk und hergestellt unter Einsatz des cyclischen Vernetzers Dicyclopentadienylacrylat (V1) und des nicht-cyclischen Vernetzers Allylmethacrylat (V2);
0,5-5 Gew.-% an Hilfsstoffen und/oder Zusatzstoffen C,
   wobei sich der Acrylnitril-Gehalt des SAN-Copolymeren A1 einerseits und der Acrylnitril-Gehalt der SAN-Pfropfhüllen der Pfropfkomponenten A2 und B2 andererseits um mindestens 5 Gew.-% im Acrylnitril-Gehalt unterscheiden.

Gegenstand dieser Erfindung ist auch eine thermoplastische Copolymer-Zusammensetzung, wie oben beschrieben, enthaltend (oder bestehend aus): mindestens 65 Gew.-% eines SAN-Copolymeren A1 aus Styrol (65) und Acrylnitril (35);
18-22 Gew.-% eines ASA-Pfropfcopolymeren A2 mit einer mittleren Teilchengröße von 150 bis 200 nm, basierend auf einem Butylacrylat-Kautschuk, hergestellt unter Einsatz von 0,5-2,2 Gew.-% des cyclischen Vernetzers Dicyclopentadienylacrylat und von 0,1-0,9 Gew.-% des nicht-cyclischen Vernetzers Allylmethacrylat;
10-15 Gew.-% eines ASA-Pfropfcopolymeren B2 mit einer mittleren Teilchengröße von 450 bis 550 nm, basierend auf einem Butylacrylat-Kautschuk und hergestellt unter Einsatz von 0,5-2,2 Gew.-% des cyclischen Vernetzers Dicyclopentadienylacrylat und von 0,1-0,9 Gew.-% des nicht-cyclischen Vernetzers Allylmethacrylat;
1-5 Gew.-% an Hilfsstoffen und/oder Zusatzstoffen C.

Das Gewichtsverhältnis von Komponente A2 zu Komponente B2 beträgt oftmals von 3:1 bis 1:1. Die jeweiligen Gewichtsverhältnisse betragen bei den Polymer-Zusammensetzungen oftmals:
a) von A1 und A2 von 65:35 bis 75:25, oftmals 70:30;
b) von A1 und B2 von 65:35 bis 75:25, oftmals 70:30;
c) von A1, A2 und B2 von etwa 70:20:10.

Die Erfindung betrifft ferner ein Verfahren zur Herstellung einer thermoplastische Copolymer-Zusammensetzung, wie oben beschrieben, bei dem man mindestens ein SAN-Copolymer A1, bestehend aus einem ggf. substituierten Styrol und Acrylnitril, sowie mindestens ein Pfropfcopolymer A2 und/oder B2 mit definierter Pfropfbasis-Pfropfhülle-Morphologie herstellt, und diese Komponenten ggf. mit den weiteren Hilfsstoffen und/oder Zusatzstoffen C vermischt.

Auch betrifft sie ein Verfahren zur Herstellung einer thermoplastische Copolymer-Zusammensetzung, bei dem man mindestens ein SAN-Copolymer A1, bestehend aus 60-70 Gew.-%, oftmals 60-65 Gew.-% eines ggf. substituierten Styrols und 30-40 Gew.-%, oftmals 30-35 Gew.-% Acrylnitril, sowie mindestens ein Pfropfcopolymer A2 und/oder B2 herstellt und diese Komponenten ggf. mit den weiteren Hilfsstoffen und/oder Zusatzstoffen C vermischt, wobei das bzw. die Pfropfcopolymere A2 und/oder B2 hergestellt werden aus:
a) 60-80 Gew.-% einer Pfropfbasis aus einem Material mit einer Glasübergangstemperatur Tg von kleiner 0°C, aufgebaut aus 80-99 Gew.-% mindestens eines C2-C4-Alkylacrylats, 0,5 bis 2,5 Gew.-% des cyclischen Vernetzers Dicyclopentadienylacrylat (V1) und 0,1 bis 2 Gew.- % eines nicht-cyclischen, mindestens zwei funktionelle Gruppen enthaltenden weiteren Vernetzers (V2),
b) 20-40 Gew.-% einer Pfropfhülle bestehend aus 71 bis 80 Gew.-% eines ggf. substituierten Styrols, 20 bis 29 Gew.-% Acrylnitril.

Gegenstand der Erfindung ist auch die Verwendung der thermoplastischen Zusammensetzung zur Herstellung von Formkörpern, Folien, Fasern oder Beschichtungen, insbesondere zur Herstellung von Formkörpern oder Beschichtungen für AussenAnwendungen.

Die Erfindung betrifft auch Formkörper, Folien, Fasern oder Beschichtungen, enthaltend eine thermoplastische Zusammensetzung, wie oben beschrieben, oder bestehend aus dieser Zusammensetzung. Durch die spezielle Kombination von Vernetzern bei der Herstellung der ASA-Copolymere kann ein optimaler Glanz sowie ein guter Gelbwert, auch nach längerer Bewitterung, realisiert werden, was insbesondere für AussenAnwendungen, z. B. bei KFZZ-Teilen von Vorteil ist.

Die einzelnen Komponenten der Zusammensetzungen werden nachfolgend weiter charakterisiert.

### Komponente A1

Komponente A1 wird in Mengen von 50 bis 82 Gew.-%, bevorzugt 65 bis 80 Gew.-% eingesetzt.

Als Monomere A11 eignen sich Styrol und Styrol-Derivate wie α-Methylstyrol und kernalkylierte Styrole, wie p-Methylstyrol und/oder tert.-Butylstyrol. Bevorzugt werden Styrol, α-Methylstyrol und/oder p-Methylstyrol, insbesondere Styrol eingesetzt.

Als Monomere A12 werden vorzugsweise Acrylnitril und/oder Methacrylnitril eingesetzt, besonders bevorzugt ist Acrylnitril. Der Anteil an dem Monomer A11 in dem Copolymer A1 beträgt im Allgemeinen 60 bis 70 Gew.-%, vorzugsweise 65 bis 70 Gew.-%. Der Anteil an dem Monomer A12 in dem Copolymer A1 beträgt im Allgemeinen 30 bis 40 Gew.-%, vorzugsweise 30 bis 35 Gew.-%. Das Copolymer A1 kann darüber hinaus noch bis zu 10 Gew. % mindestens eines weiteren, copolymerisierbaren Monomeren A13 wie beispielsweise Methylacrylat, Ethylacrylat, Propylacrylat, Methylmethacrylat, Ethylmethacrylat, Phenylmaleinimid, Maleinsäureanhydrid, Acrylamid und/oder Vinylmethylether enthalten.

Bevorzugt ist A1 ein Copolymer von Styrol und Acrylnitril. Dieses SAN-Copolymer ist oftmals hergestellt mit (etwa) 65 Gew.-% Styrol und (etwa) 35 Gew.-% AN, der AN-Anteil kann jedoch auch kleiner sein, z. B. 32 bis 34 Gew.-%. Das SAN-Copolymer hat oftmals eine Molmasse im Bereich Mw von 120.000 bis 180.000 g/Mol. Die Herstellung von A1 kann nach allgemein bekannten Methoden (DE-A 31 49 358, Seite 9, Zeilen 18 bis 32 und DE-A 32 27 555, Seite 9, Zeilen 18 bis 32) durchgeführt werden, beispielsweise durch allgemein bekannte Copolymerisation von A11, A12 und gegebenenfalls A13 in Masse, Lösung, Suspension oder wässriger Emulsion bei üblichen Temperaturen in bekannten Apparaturen.

### Komponente A2

Die Komponente A2 wird in der Regel in Mengen von mindestens 15 Gew.-%, bei Verwendung mehrerer Kautschuke bevorzugt 10 bis 30 Gew.-% eingesetzt.

Als Monomere A211 für die Herstellung der kautschukartigen Pfropfbasis A21 kommen im Allgemeinen (Meth)acrylsäurealkylester mit einem geradkettigen oder verzweigten Alkylrest mit 2 bis 8 Kohlenstoffatomen, bevorzugt 2 bis 4 Kohlenstoffatomen, in Betracht. Bevorzugt sind Acrylsäurealkylester mit einem geradkettigen oder verzweigten Alkylrest mit bevorzugt 2 bis 8 Kohlenstoffatomen, besonders bevorzugt 2 bis 4 Kohlenstoffatomen, insbesondere Acrylsäure-n-butylester. Die (Meth)acrylsäurealkylester können bei der Herstellung der Pfropfgrundlage A21 einzeln oder in Mischung eingesetzt werden.

Weiterhin enthält die kautschukartige Pfropfgrundlage mindestens einen nicht-cyclischen Vernetzer (A213) und mindestens einen cyclischen Vernetzer (A212). Beispielsweise werden 0,1 bis 2,0 Gew.-% Allylmethacrylat eingesetzt und 0,5 bis 2,5 Gew.-%, oftmals 0,9 bis 2,5 Gew.-% des Acrylsäureester des Tricyclodecenylalkohols (Dicyclopentadienylacrylat; DCPA).

Darüber hinaus kann die kautschukartige Pfropfgrundlage A21 bis zu 18 Gew % an weiteren, copolymerisierbaren Monomeren A214 enthalten. Oftmals sind jedoch keine weiteren Vernetzer A214 vorhanden. Geeignete Monomere A214 sind beispielsweise Divinylbenzol, Diallylmaleat, Diallylfumarat und/oder Diallylphthalat, Tri-Allylcyanurat. Zur Herstellung der Pfropfhülle A22 geeignete Monomere A221 sind vinylaromatische Monomere wie Styrol und/oder Styrolderivate, zum Beispiel Alkylstyrol, vorzugsweise α-Methylstyrol, und kernalkylierte Styrole, wie p-Methylstyrol und/oder tert.-Butylstyrol. Bevorzugt wird Styrol.

Beispiele für das polare, copolymerisierbare ungesättigte Monomere A222 ist Acrylnitril, aber auch Methacrylnitril ist einsetzbar. Als mögliche weitere copolymerisierbare Monomere A223 können beispielsweise folgende Verbindungen Verwendung finden: Acrylsäure, Methacrylsäure, Maleinsäureanhydrid, Methylmethacrylat, Ethylmethacrylat, Phenylmaleinimid, Acrylamid und Vinylmethylether. Bevorzugt ist A223 Methylmethacrylat und/oder Maleinsäureanhydrid.

Bevorzugt ist die Pfropfhülle A22 ein Copolymer von Styrol und Acrylnitril. Die Herstellung von feinteiligen Pfropfcopolymeren A2 kann beispielsweise wie in DE-A 4006643 (Seite 2, Zeile 65 bis Seite 3, Zeile 43) beschrieben erfolgen.

### Komponente B2

Die Komponente B2 wird in Mengen von 10 bis 35 Gew.-%, bei Verwendung mehrerer Kautschuke bevorzugt 5 bis 20 Gew.-% eingesetzt.

Als Monomere für die Pfropfbasis B21 werden die vorstehend für die Pfropfgrundlage A21 beschriebenen entsprechenden Verbindungen (A211, A212, A213 und A214) verwendet. Als Monomere für die Pfropfhülle B22 werden ebenfalls die vorstehend für die Pfropfhülle A22 beschriebenen entsprechenden Verbindungen (A221, A222 und A223) verwendet.

Die Herstellung von Pfropfcopolymeren aus einer elastomeren kautschukartigen Pfropfgrundlage und einer Propfhülle ist allgemein bekannt (siehe z.B. DE 4006643 A1, Seite 2, Zeile 65 bis Seite 3, Zeile 43; DE 4131729 A1 Seite 3, Zeile 12 bis Seite 4, Zeile 49). Die Herstellung von grobteiligen Propfcopolymeren B2 kann durch Pfropfung in zwei Stufen wie in DE-A 3227555 (Komponente B: Seite 8, Zeile 14 bis Seite 10, Zeile 5) und DE-A 31 49 358 (Seite 8, Zeile 14 bis Seite 10, Zeile 5) beschrieben erfolgen.

Zur Herstellung der Pfropfcopolymeren A2 wird im Allgemeinen zunächst das als Pfropfgrundlage dienende kautschukartige Acrylsäureester-Polymerisat A21 z.B. durch Emulsionspolymerisation hergestellt, indem man beispielsweise Alkylacrylat A211 und den Vernetzer A212 und gegebenenfalls A213 und/oder A214 beispielsweise in wässriger Emulsion in an sich bekannter Weise bei Temperaturen zwischen 20 und 100 °C, vorzugsweise zwischen 50 und 80 °C polymerisiert. Auf diesem dabei entstehenden Polyacrylsäureester-Latex kann ein Gemisch von vinylaromatischen Monomeren A221 mit einem polaren, copolymerisierbaren ungesättigten Monomeren A222 sowie gegebenenfalls weiteren Monomeren A223 aufgepfropft werden, wobei die Pfropfmischpolymerisation ebenfalls vorzugsweise in wässriger Emulsion durchgeführt wird.

Die Herstellung der Pfropfcopolymeren B2 erfolgt für die Propfgrundlage B21 wie zuvor für A2 beschrieben, aber die Pfropfung kann in zwei Stufen erfolgen, wobei im Allgemeinen zuerst das vinylaromatische Monomer in Gegenwart der Pfropfgrundlage B21 polymerisiert wird. In der zweiten Stufe kann dann die Pfropfmischpolymerisation mit einem Gemisch enthaltend mindestens ein vinylaromatisches Monomer und Acrylnitril durchgeführt werden. Die eingesetzten und in der erfindungsgemäßen Polymermischung enthaltenen Mengen der verschiedenen Komponenten sind bereits eingangs beschrieben worden.

### Komponenten C

Des Weiteren können bei der Polymerisation die üblichen Hilfsstoffe Verwendung finden, beispielsweise in Mengen von 0 bis 5 Gew.-%, oftmals 0,5 bis 5 Gew.-%. Zu nennen sind beispielsweise Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen, oder Harzseifen. Auch werden eingesetzt: Polymerisationsinitiatoren wie z.B. übliche Persulfate, beispielsweise Kaliumpersulfat oder bekannte RedoxSysteme, Polymerisationshilfsstoffe wie z.B. übliche Puffersubstanzen, durch welche pH-Werte von vorzugsweise 6 bis 9 eingestellt werden, z.B. Natriumbicarbonat und/oder Natriumpyrophosphat, und/oder Molekulargewichtsregler, beispielsweise Mercaptane, Terpinole und/oder dimeres α-Methylstyrol. Die Molekulargewichtsregler werden oft in einer Menge von 0 bis 3 Gew.-%, bezogen auf das Gewicht der Reaktionsmischung, eingesetzt.

Zur Herstellung der erfindungsgemäßen Polymermischung werden die vorbeschriebenen teilchenförmigen Pfropfpolymerisate A2 und/oder B2 in die Hartkomponente, d.h. das SAN-Copolymer A1, eingearbeitet. Die Einarbeitung kann zum Beispiel dadurch erfolgen, dass das bzw. die teilchenförmigen Pfropfpolymerisat(e) durch Zugabe eines Elektrolyten aus der Emulsion isoliert wird und anschließend, gegebenenfalls nach Trocknung, durch gemeinsames Extrudieren, Kneten oder Walzen mit der Hartkomponente vermischt wird. Bei der Herstellung dieser Mischung können auch die nachstehenden Hilfs-/und oder Zusatzstoffe zugesetzt werden.

Die üblichen Zusatzstoffe können Verwendung finden, beispielsweise in Mengen von 0 bis 5 Gew.-%, oftmals von 0,5 bis 5 Gew.-%.

Als Zusatzstoffe können beispielsweise Weichmacher, Antistatika, Lichtschutzmittel, Gleitmittel, Treibmittel, Haftvermittler, gegebenenfalls weitere verträgliche thermoplastische Kunststoffe, Füllstoffe, oberflächenaktive Substanzen, Flammschutzmittel, Farbstoffe und Pigmente, Stabilisatoren gegen Oxidation, Hydrolyse, Licht (UV), Hitze oder Verfärbung und/oder Verstärkungsmittel enthalten sein.

Als Lichtschutzmittel können alle üblichen Lichtschutzmittel eingesetzt werden, beispielsweise Verbindungen auf Basis von Benzophenon, Benztriazol, Zimtsäure, organischen Phosphiten und Phosphoniten sowie sterisch gehinderte Amine.

Als Gleitmittel kommen beispielsweise Kohlenwasserstoffe wie Öle, Paraffine, PE-Wachse, PP-Wachse, Fettalkohole mit 6 bis 20 Kohlenstoffatomen, Ketone, Carbonsäuren wie Fettsäuren, Montansäure oder oxidiertes PE-Wachs, Carbonsäureamide sowie Carbonsäureester, z.B. mit den Alkoholen, Ethanol, Fettalkoholen, Glycerin, Ethandiol, Pentaerythrit und langkettigen Carbonsäuren als Säurekomponente in Betracht.

Als Stabilisatoren können übliche Antioxidantien, beispielsweise phenolische Antioxidantien, z.B. alkylierte Monophenole, Ester und/oder Amide der b-(3,5-di-tertierbutyl-4-hydroxyphenyl-propionsäure und/oder Benztriazole eingesetzt werden. Beispielhaft sind mögliche Antioxidantien in EP-A 698637 und EP-A 669367 erwähnt. Konkret kann man als phenolische Antioxidantien 2,6-Ditertierbutyl-4-methylphenol, Pentaerythrityltetrakis-[3-(3,5-ditertiärbutyl-4-hydroxyphenyl)-propionat und N,N'-Di-(3,5-ditertiärbutyl-4-hydroxyphenyl-propionyl)-hexamethylendiamin erwähnen. Die genannten Stabilisatoren können einzeln oder in Mischungen verwendet werden.

Weitere verträgliche thermoplastische Kunststoffe können beispielsweise Polyester (z.B. Polyethylenterephthalat, Polybutylenterephthalat), PMMA, Polycarbonat, Polyamid, Polyoxymethylen, Polystyrol, Polyethylen, Polypropylen, Polyvinylchlorid sein.

Diese Hilfs- und/oder Zusatzstoffe können sowohl bereits bei der Herstellung der thermoplastischen Komponente A1 eingesetzt werden, als auch der Komponente A1, A2 und/oder B2 bei der Herstellung der Mischung zugesetzt werden.

Weiterer Gegenstand der Erfindung sind Formteile hergestellt aus den erfindungsgemäßen Polymer-Zusammensetzungen. Die erfindungsgemäßen Polymerzusammensetzungen können beispielsweise pelletiert oder granuliert, oder nach allgemein bekannten Verfahren, beispielsweise durch Extrusion, Spritzguss, Blasformen oder Kalandierung zu Formteilen aller Art wie Kabelummantelungen, Folien, Schläuchen, Fasern, Profilen, Schuhschalen, Schuhsohlen, technischen Formteilen (wie KFZ-Teilen); Gebrauchsartikeln, Beschichtungen, Faltenbalgen und/oder Tier-ohrmarken verarbeitet werden.

Die erfindungsgemäßen Polymermischungen zeichnen sich insbesondere bei bzw. nach Bewitterung durch einen Erhalt des Glanzes und des Gelbwertes aus. Daher können die erfindungsgemäßen Polymermischungen besonders vorteilhaft zur Herstellung von Formteilen verwendet werden, die im Freien, bei Sonnenschein und wechselnden Temperaturen eingesetzt werden. Beispielhaft ohne darauf zu beschränken seien in diesem Zusammenhang Außenanwendungen z.B. im Automobil- oder Bausektor genannt.

Ein Gegenstand der Erfindung ist auch die Herstellung der Copolymer-Zusammensetzunegen durch Vermischen der Komponenten und die Verwendungen von aus den erfindungsgemäßen Polymermischungen hergestellten Formteilen für Außenanwendungen. Diese Vorteile wie optimierter Glanz und verbesserter UV-Witterungsstabilität sollen anhand der folgenden Beispiele dargestellt werden.

Die Beispiele, die Figuren und die Patentansprüche dienen der näheren Beschreibung der Erfindung.

### Beispiele

Für die Herstellung der thermoplastischen Copolymer-Zusammensetzungen wurden die folgenden Komponenten eingesetzt:
SAN-Copolymer (A1), mit 65% S und 35 % AN
zwei verschiedene Kautschuke (A2 und B2, beide mit Tg < 0 °C),
genannt KAUTSCHUK-200 und KAUTSCHUK-500
Hilfs- und Zusatzstoffen (C), wie z.B. C12- bis C18-Paraffinsulfonsäure, Initiatoren wie Kaliumperoxodisulfat, sowie Natriumhydrogencarbonat und Natriumpyrophosphat; sowie verschiedene Vernetzer, insbesondere Allylmethacrylat (AMA) und/oder Dicyclopentadienylacrylat (DCPA).

Die Charakterisierung der erfindungsgemäß hergestellten thermoplastischen Zusammensetzungen kann durch Messung verschiedener Parameter erfolgen.
a) Die Charpy-Kerbschlagzähigkeit wird gemessen nach ISO 179 1eA bei 23°C, sowie bei 220 °C Spritzgußtemperatur. Ziel ist es, eine hohe Kerbschlagzähigkeit bereits bei niedrigen Verarbeitungstemperaturen zu erhalten
b) Die mittlere Teilchengröße wird mit einer Ultrazentrifuge gemäß der Methode von W. Scholtan and H. Lange, Kolloid-Z. and Z. Polymere 250 (1972), 782-796 bestimmt. Die Ultrazentrifugen-Messung ergibt die integrale Massenverteilung der Teilchen einer Probe. Der mittlere Teilchendurchmesser d₅₀ ist definiert als der Durchmesser, bei dem 50 Gew.-% der Teilchen kleinere und 50 Gew.-% der Teilchen größere Durchmesser haben.
c) Die Bewitterung der thermoplastischen Zusammensetzungen kann nach DIN EN ISO 4892-2 ("Kunststoffe - Künstliches Bestrahlen oder Bewittern in Geräten"; Teil 2: Xenonbogenlampen (ISO 4892-2:2013) erfolgen.
d) Die Gelbwert-Bestimmung (YI) kann für die thermoplastischen Zusammensetzungen nach der Norm DIN 6767 (1980) "Gelbindex von hellen Kunststoffen" erfolgen.
e) Die Glanzwert-bestimmung kann für die thermoplastischen Zusammensetzungen nach der DIN 67530 (1982) "Glanz auf Oberflächen von Kunststoffen" bei einem Messwinkel von 60° erfolgen (siehe ISO 2813-1978).

### Beispiel 1 Herstellung der thermoplastischen Formmassen

### Komponente A1:

SAN-Copolymer (Matrix) hergestellt mit 65 Gew.-% Styrol und 35 Gew.-% Acrylnitril; Viskositätszahl: 80 ml/g (VZ; gemessen in 0,5 %iger Toluol-Lösung bei 20°C); Molmasse: Mw: 145.800 g/Mol; Mn: 57.700 g/Mol.

Die Komponenten A1 können ganz allgemein nach einem Lösungspolymerisations-Verfahren hergestellt werden, wie es beispielhaft im Kunststoff-Handbuch, Hrsg. Vieweg-Daumiller, Band V (Polystyrol), Carl-Hanser-Verlag, München, 1969, Seite 124, beschrieben wird.

### Herstellung der Komponenten A2 und B2:

Pfropfkautschuk, kleinteilig (z.B. KAUTSCHUK-200) hergestellt gemäß DE-A 40 06 643, wie folgt:
a) Beispielhafte Herstellung der Pfropfgrundlage
   160 g des Gemisches aus 98 Gew.-% Butylacrylat (BA) und 2 Gew.-% Vernetzer (DCPA) wurden in 1500 g Wasser unter Zusatz von 5 g des Natriumsalzes einer C12-bis C18-Paraffinsulfonsäure, 3 g Kaliumperoxodisulfat, 3 g Natriumhydrogencarbonat und 1,5 g Natriumpyrophosphat unter Rühren auf 60° C erwärmt. 10 Minuten nach dem Anspringen der Polymerisationsreaktion wurden innerhalb von 3 Stunden weitere 840 g der Monomer-Mischung zugegeben. Nach Beendigung der Monomer-Zugabe wurde die Emulsion noch eine Stunde bei 60° C gehalten.
b) Herstellung des teilchenförmigen Pfropfpolymers (A2; z.B. KAUTSCHUK-200)
   2100 g der nach Vorschrift (a) hergestellten Emulsion wurden mit 1150 g Wasser und 2,7 g Kaliumperoxodisulfat gemischt und unter Rühren auf 65° C erwärmt. Nach Erreichen der Reaktionstemperatur wurde im Laufe von 3 Stunden eine Mischung aus 420 g Styrol und 140 g Acrylnitril dazu dosiert. Nach Beendigung der Zugabe wurde die Emulsion noch 2 Stunden bei 65° C gehalten. Das Pfropfpolymer wurde mittels Calciumchlorid-Lösung bei 95° C aus der Emulsion gefällt, mit Wasser gewaschen und im warmen Luftstrom getrocknet. Die mittlere Teilchengröße der Kautschuk-Latex-Teilchen betrug 100 nm.
c) Herstellung des Pfropfkautschuk (B2, grobteilig, z.B. KAUTSCHUK-500) entsprechend zu DE-A 4131729:
   Zu einer Vorlage aus 1,5 Teilen eines analog zu oben hergestellten Polyacrylat-Latex, wurden nach Zugabe von 50 Teilen Wasser und 0,1 Teilen Kalilumpersulfat im Verlauf von 3 Stunden einerseits eine Mischung aus 49 Teilen Butylacrylat und 1 Teil Tricyclodecenylacrylat (DCPA) und andererseits eine Lösung von 0,5 Teilen des Natriumsalzes einer C12-C18-Paraffinsulfonsäure in 25 Teilen Wasser bei 60° C zugegeben. Nach Zulauf-Ende wurde 2 Stunden nachpolymerisiert. Der erhaltene Latex des vernetzten Butylacrylat-Polymers hatte einen Feststoffgehalt von 40%. Die mittlere Teilchengrösse (Gewichtsmittel des Latex) wurde zu 430 nm ermittelt. Die Teilchengrössen-Verteilung war eng (Q = 0,1). 150 Teile dieses Latex wurden nun mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65° C erhitzt. Die bei der Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mit einer Calciumchloridlösung bei 95° C aus der Dispersion ausgefällt, abgetrennt, mit Wasser gewaschen und im warmen Luftstrom getrocknet. Der Pfropfgrad des Pfropfmischpolymerisates wurde zu 35% ermittelt. Die mittlere Teilchengrösse der Kautschuk-Latex-Teilchen betrug 510 nm.
d) Zur Herstellung der Mischung des Pfropfkautschuks (A2 bzw. B2) mit der Hartkomponente, dem SAN-Copolymer (A1), wird das gefällte und getrocknete Pfropfmischpolymer aus (b) bzw. c) auf einem Extruder bei 260° C so mit der Hartkomponente A1 abgemischt, so dass das resultierende Gemisch einen Pfropfpolymer-Anteil von etwa 50% (Gew.-%) aufwies. Aus diesem Gemisch können durch Spritzguss Formteile hergestellt werden.

Die Komponente A1 wurde in getrennten Versuchen mit der jeweiligen Komponente A2 bzw. B2 in einem Gewichtsverhältnis von 70:30 sowie mit den jeweiligen weiteren Zusatzstoffen in einem Extruder (ZSK 30 Doppelschneckenextruder der Fa. Werner & Pfleiderer) bei einer Temperatur von 230°C innig vermischt.

### Beispiel 2

### Herstellung von thermoplastischen Polymerzusammensetzungen mit optimiertem Glanz und UV-Witterungsstabilität

Zur Verdeutlichung der Synergieeffekte erzielt durch den Einsatz mehrerer verschiedener Vernetzter, insbesondere von DCPA und AMA, auf die Glanz-Eigenschaften der thermoplastischen Formmassen bzw. Formteile, sowie auf deren Gelbwerte nach Bewitterung, erfolgte eine Herstellung der folgenden ASA-Formmassen (unter Einsatz von kleinteiligem KAUTSCHUK-200 oder großteiligem KAUTSCHUK-500 durch Compoundierung auf einem Extruder, wobei für Vergleichszwecke entweder nur ein Vernetzer (cyclisch oder nicht-cyclisch) oder aber eine Kombination von zwei Vernetzern (cyclisch und nicht-cyclisch) eingesetzt wurden:

| KAUTSCHUK-200 Pfropf | 2.0% DCPA | 0.4% AMA | 1.0% DCPA+0.4% AMA |
|---|---|---|---|
| Gel | 98.6 | 98.5 | 99.1 |
| QI | 10.1 | 8.9 | 7.5 |

| KAUTSCHUK-500 Pfropf | 2.0% DCPA | 0.4% AMA | 1.0% DCPA+0.2% AMA |
|---|---|---|---|
| Gel | 90.6 | 93.1 | 91.9 |
| QI | 8.9 | 7.3 | 8.3 |

Für ASA-Zusammensetzungen mit einem KAUTSCHUK-200 und einem 10-55% Kautschuk-Gehalt konnten mit 0-2,0% Weichmacher (Phthalsäureester-Isomere),0-1,5 Gew.-% Wachs, 0-1,5 Gew.-% UV Stabilisatoren und 0-2 Gew.-% Pigmente verbesserte Glanzwerte, insbesondere nach Bewitterung gefunden werden. Die ASA-Zusammensetzungen müssen keine Hilfs- und/oder Zusatzstoffe C enthalten, weisen jedoch für größere Produktionsmengen häufig 0,5 bis 5 Gew.-% dieser auf.

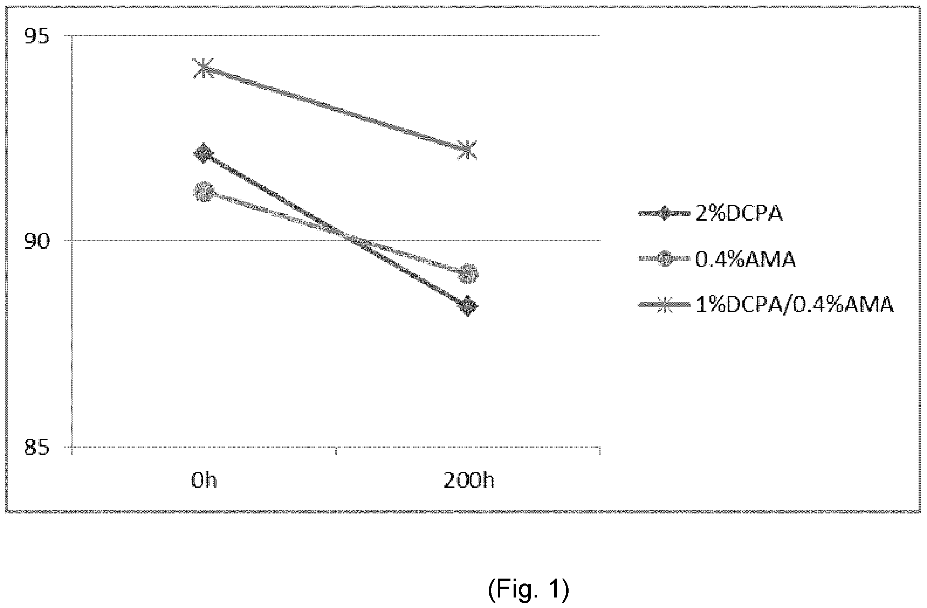

In Figur 1 werden die Glanzwerte (in %) nach Bewitterung (0 Stunden und 200 Stunden) aufgezeigt, wobei ersichtlich wird, dass durch den kombinierten Einsatz eines cyclischen Vernetzers (DCPA) und eines nicht-cyclischen, mindestens zwei funktionelle Gruppen enthaltenden weiteren Vernetzers (AMA), bei der Herstellung des Kautschuks, deutlich verbesserte Glanzwerte für die Formteile erzielt werden.

| ASA, KAUTSCHUK-200 | 2.0% DCPA | 0.4% AMA | 1.0% DCPA+0.4% AMA |
|---|---|---|---|
| Ak 23°C | 8.8 | 7.5 | 8.1 |

Wie diese Tabelle zeigt, ist auch die Kerbschlagzähigkeit (Ak, bei 23° C gemessen) bei Einsatz von zwei verschiedenen Vernetzern sehr günstig.

### Beispiel 3

### Herstellung von thermoplastischen Polymerzusammensetzungen mit optimiertem Glanz und UV-Witterungsstabilität

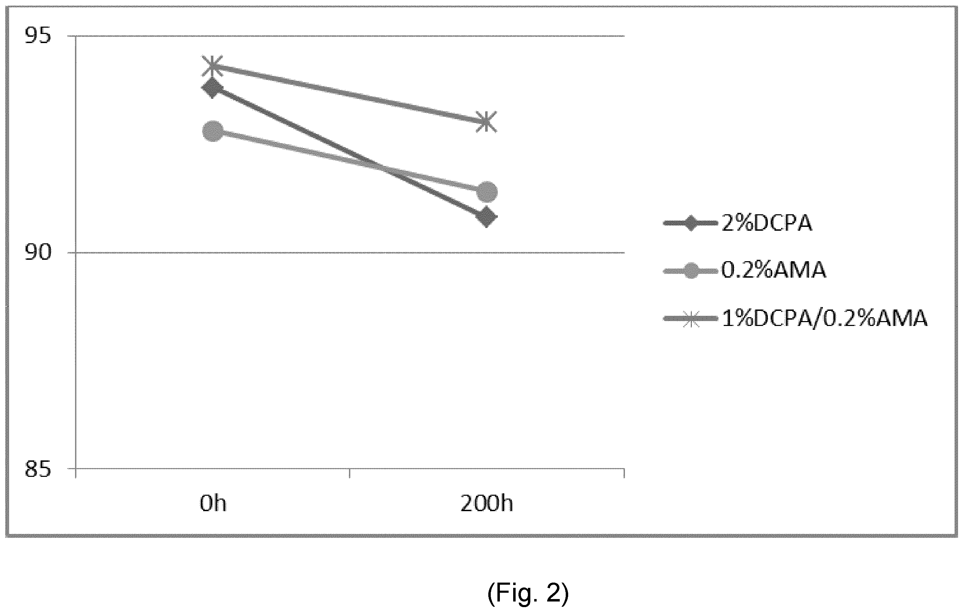

Bei einem in Analogie zu Beispiel 2 durchgeführten Experiment wurden die in Figur 2 aufgezeigten Glanzverlaufs-Werte (in %) nach Bewitterung für mit verschiedenen Vernetzter-Typen hergestellte ASA-Formmassen (mit grobteiligem KAUTSCHUK-500 gefunden.

### Beispiel 4

### Herstellung von ASA-Polymerzusammensetzungen mit zwei verschiedenen Kautschuk-Typen und optimiertem Glanz und UV-Witterungsstabilität

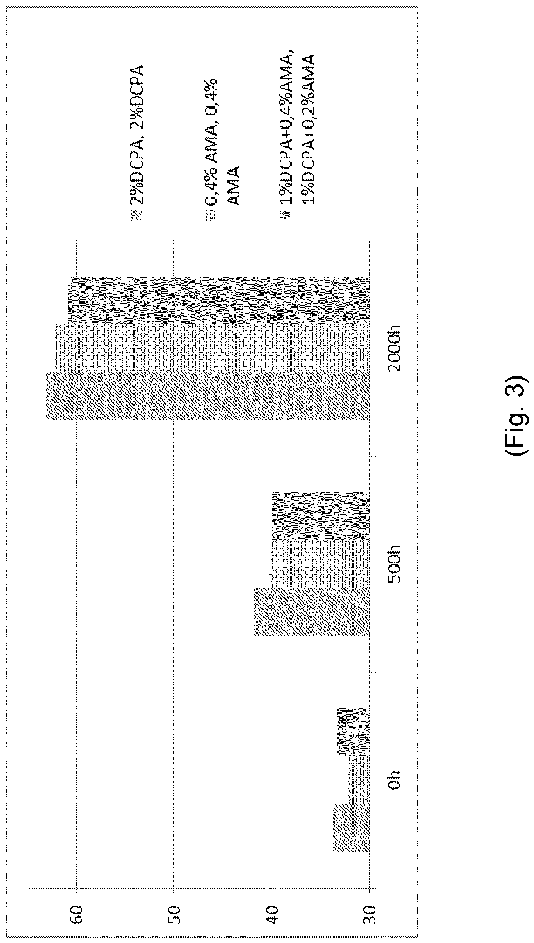

Bei einem in Analogie zu Beispiel 2 durchgeführten Experiment wurden die in Figur 3 aufgezeigten Gelb-Werte (YI) nach Bewitterung für mit verschiedenen Vernetzter-Typen hergestellte ASA-Formmassen (mit grobteiligem KAUTSCHUK-500) und mit kleinteiligem KAUTSCHUK-200) gefunden. Die Zusammensetungen enthielten dabei alle eine Mischungen aus 70 Gew.-% SAN (A1) sowie 20 Gew.-% KAUTSCHUK-200 und 10 Gew.-% KAUTSCHUK-500.

Für diese ASA-Zusammensetzungen mit zwei Kautschuk-Typen konnten deutlich verbesserte Gelbwerte, insbesondere nach Bewitterung gefunden werden, wenn eine Kombination von DCPA und AMA bei der Kautschuk-Herstellung eingesetzt wurde.

Die jeweils linke Säule zeigt den Einsatz von "nur DCPA" (bei beiden Kautschuk-Typen jeweils 2%); die Gelbwerte sind hoch. Die jeweils mittlere Säule zeigt den Einsatz von "nur AMA" (bei beiden Kautschuk-Typen jeweils 0,4%). Die jeweils rechte Säule zeigt den Einsatz von "DCPA plus AMA" (beim Kautschuk-Typ KAUTSCHUK-200: 1% DCPA + 0,4 AMA; beim Kautschuk-Typ KAUTSCHUK-500: 1% DCPA + 0,2 AMA). Man sieht, dass nach längerer Bewitterung (200h) durch den kombinierten Einsatz eines cyclischen Vernetzers (DCPA) und eines nicht-cyclischen weiteren Vernetzers (AMA) deutlich verbesserte Gelbwerte (niedrigerer YI) für die Formteile erzielt werden.

### Beispiel 5

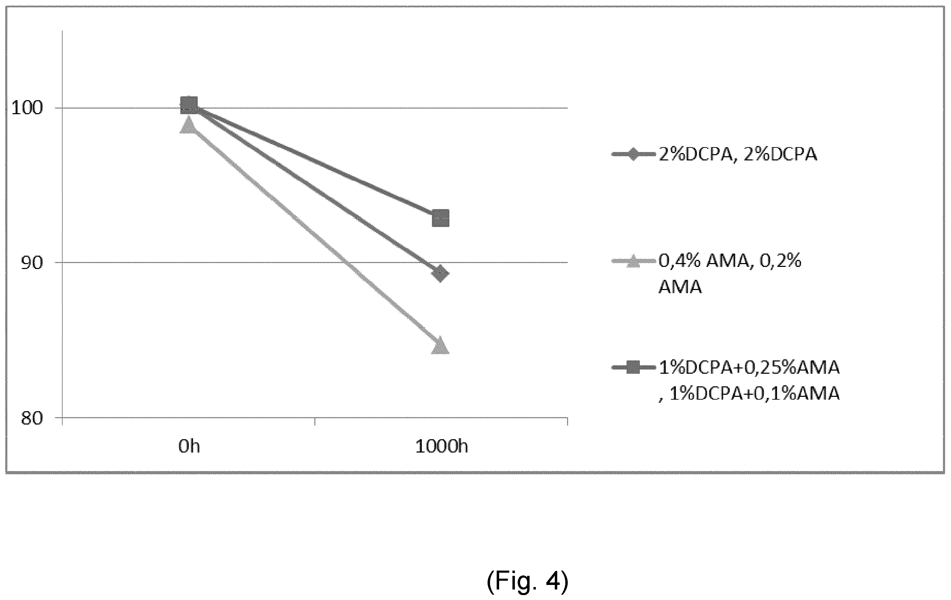

Bei dem in Analogie zu Beispiel 4 durchgeführten Experiment wurden ferner die in Figur 4 aufgezeigten Glanz-Werte (%) nach Bewitterung (0 Stunden und 1000 Stunden) für mit verschiedenen Vernetzter-Typen hergestellte ASA-Formmassen mit grobteiligem KAUTSCHUK-500 und mit kleinteiligem KAUTSCHUK-200 gefunden.

Die Zusammensetungen enthielten dabei alle eine Mischungen aus 70 Gew.-% SAN (A1) sowie 20 Gew.-% Kautschuk (KAUTSCHUK-200) und 10 Gew.-% Kautschuk (KAUTSCHUK-500).

| SAN:KAUTSCHUK-200:KAUTSCHUK-500 (70:20:10) | 2.0% DCPA | 0.4% AMA | 1.0% DCPA+0.25% AMA |
|---|---|---|---|
| | 2.0% DCPA | 0.4% AMA | 1.0% DCPA+0.1% AMA |
| Ak 23°C | 12.5 | 10.0 | 11.8 |
| An 23°C | 298 | 284 | 279 |

Wie diese Tabelle zeigt, ist auch die Kerbschlagzähigkeit (Ak) und die Schlagzähigkeit (An) bei Einsatz von zwei verschiedenen Vernetzern sehr günstig.

Für diese ASA-Zusammensetzungen mit zwei unterschiedlichen Kautschuk-Typen konnten deutlich verbesserte Glanzwerte, insbesondere nach langer Bewitterung gefunden werden, wenn eine Kombination von DCPA und AMA bei der Kautschuk-Herstellung eingesetzt wurde. Der Einsatz von "nur DCPA" (bei beiden Kautschuk-Typen jeweils 2%) führt zu einem Glanzwert von unter 90%. Der Einsatz von "nur A-MA" (beim Kautschuk-Typ KAUTSCHUK-200: 0,4 AMA; beim Kautschuk-Typ KAUTSCHUK-500: 0,2 AMA) führt zu noch schlechterem Glanz nach Bewitterung. Der Einsatz von "DCPA plus AMA" (beim KAUTSCHUK-200: 1% DCPA + 0,25 AMA; beim KAUTSCHUK-500: 1% DCPA + 0,1 AMA) führt nach einer Bewitterung von mehr als 40 Tagen zu einem deutlich über 90 % liegendem Glanzwert.

### Beispiel 6

### Herstellung von ASA-Polymerzusammensetzungen mit grobteiligem Kautschuk und optimiertem Glanz und UV-Witterungsstabilität

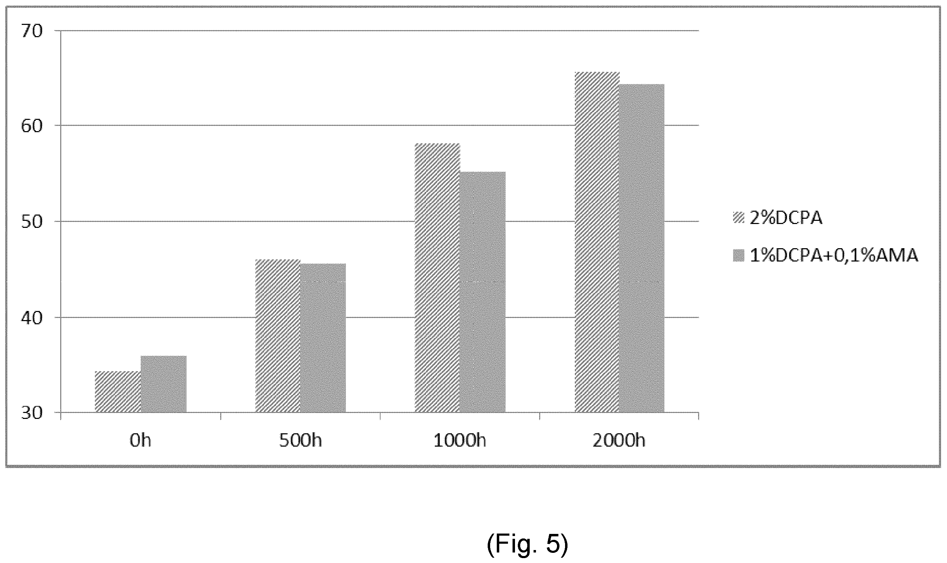

Bei einem in Analogie zu Beispiel 3 durchgeführten Experiment wurden die in Figur 5 aufgezeigten Gelb-Werte (YI) nach Bewitterung (0 Stunden sowie 500, 1000 und 2000 h) für mit verschiedenen Vernetzter-Typen hergestellte ASA-Formmassen (mit grobteiligem KAUTSCHUK-500) gefunden. Die Zusammensetungen enthielten dabei alle eine Mischungen aus 70 Gew.-% SAN (A1) sowie 30 Gew.-% KAUTSCHUK-500.
Für diese ASA-Zusammensetzungen mit grobteiligem Kautschuk konnten deutlich verbesserte Gelbwerte, insbesondere nach langer Bewitterung (mindestens 1000 h) gefunden werden, wenn eine Kombination von DCPA und AMA bei der Kautschuk-herstellung eingesetzt wurde. Die jeweils linke Säule zeigt den Einsatz von "nur DCPA"; die Gelbwerte sind nach Bewitterung hoch. Die jeweils rechte Säule zeigt den Einsatz von "DCPA plus AMA" (1% DCPA + 0,1 % AMA). Man sieht, dass nach längerer Bewitterung (1000h) durch den kombinierten Einsatz eines cyclischen Vernetzers (DCPA) und eines nicht-cyclischen weiteren Vernetzers (AMA) deutlich verbesserte Gelbwerte (niedrigerer YI) für die Formteile erzielt werden.

### Beispiel 7

### Herstellung von ASA-Polymerzusammensetzungen mit grobteiligem Kautschuk und optimiertem Glanz und UV-Witterungsstabilität

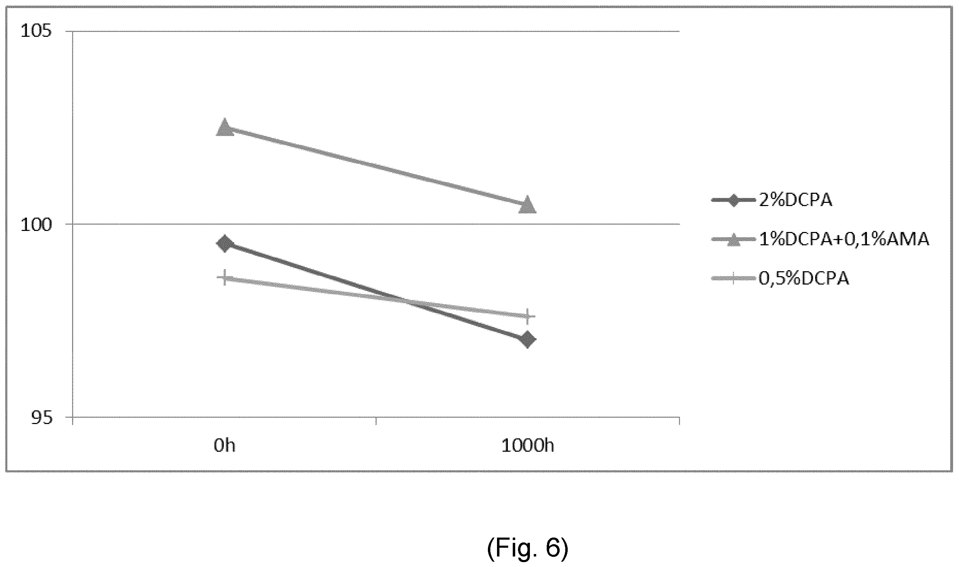

Bei einem in Analogie zu Beispiel 3 durchgeführten Experiment wurden die in Figur 6 aufgezeigten Glanz-Werte (%) nach Bewitterung (0 Stunden sowie 1000 h) für mit verschiedenen Vernetzter-Typen hergestellte ASA-Formmassen (mit grobteiligem KAUTSCHUK-500) gefunden. Die Zusammensetungen enthielten dabei alle eine Mischungen aus 70 Gew.-% SAN (A1) sowie 30 Gew.-% KAUTSCHUK-500.

| SAN:KAUTSCHUK-500 (70:30) | 2.0% DCPA | 1.0% DCPA+0.1% AMA |
|---|---|---|
| Ak 23°C | 11.9 | 11.0 |
| Ak 0°C | 8.2 | 8.3 |
| An -30°C | 96 | 96 |

Wie diese Tabelle zeigt, ist die Schlagzähigkeit (Ak bzw An), bei drei unterschiedlichen Temperaturen gemessen, bei Einsatz von zwei verschiedenen Vernetzern sehr günstig.

Für diese ASA-Zusammensetzungen mit grobteiligem Kautschuk konnten deutlich verbesserte Glanzwerte von über 100 %, vor und nach Bewitterung, gefunden werden, wenn eine Kombination von DCPA und AMA bei der Kautschuk-Herstellung eingesetzt wurde.

### Beispiel 8

### Herstellung von ASA-Polymerzusammensetzungen mit kleinteiligem Kautschuk und optimiertem Glanz und UV-Witterungsstabilität

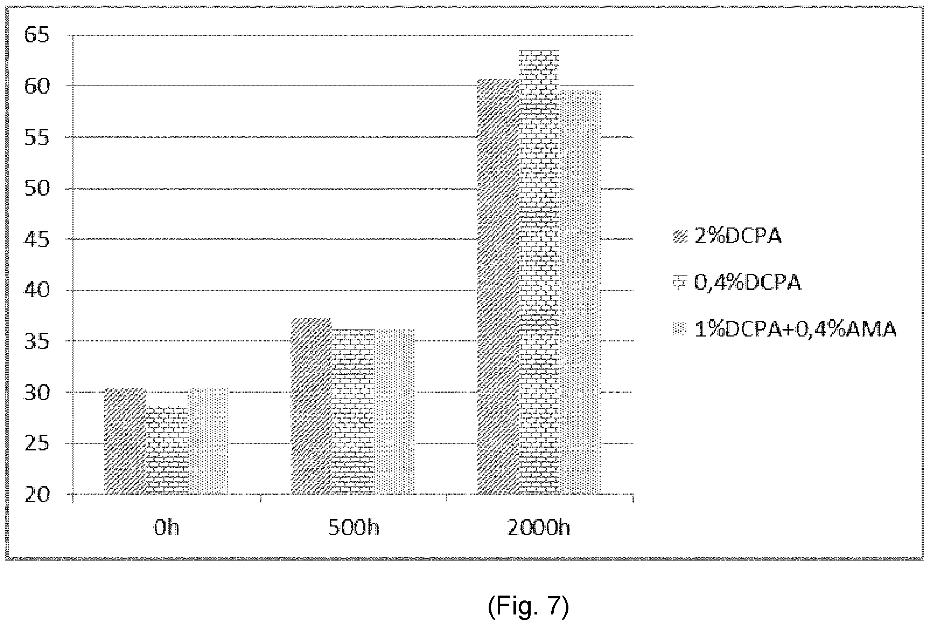

Bei einem in Analogie zu Beispiel 2 durchgeführten Experiment wurden die in Figur 7 aufgezeigten Gelb-Werte (YI) nach Bewitterung (0 Stunden sowie 500 und 2000 h) für mit verschiedenen Vernetzter-Typen hergestellte ASA-Formmassen (mit kleinteiligem Kautschuk (KAUTSCHUK-200) gefunden. Die Zusammensetungen enthielten dabei alle eine Mischungen aus 70 Gew.-% SAN (A1) sowie 30 Gew.-% Kautschuk (KAUTSCHUK-200).

Für diese ASA-Zusammensetzungen mit kleinteiligem Kautschuk konnten deutlich verbesserte Gelbwerte, insbesondere nach Bewitterung gefunden werden, wenn eine Kombination von DCPA und AMA bei der Kautschuk-Herstellung eingesetzt wurde. Die jeweils linke Säule zeigt den Einsatz von "nur DCPA" (2 Gew.-%); die Gelbwerte sind nach Bewitterung hoch.

Die jeweils mittlere Säule zeigt den Einsatz von "nur DCPA" (0,4 Gew.-%); die Gelbwerte sind nach Bewitterung besonders hoch. Die jeweils rechte Säule zeigt den Einsatz von "DCPA plus AMA" (1% DCPA + 0,4 % AMA). Man sieht, dass nach längerer Bewitterung (mindestens 1000h) durch den kombinierten Einsatz eines cyclischen Vernetzers (DCPA) und eines nicht-cyclischen weiteren Vernetzers (AMA) deutlich verbesserte Gelbwerte (niedrigerer YI) für die Formteile erzielt werden.

### Beispiel 9

### Herstellung von ASA-Polymerzusammensetzungen mit kleinteiligem Kautschuk und optimiertem Glanz und UV-Witterungsstabilität

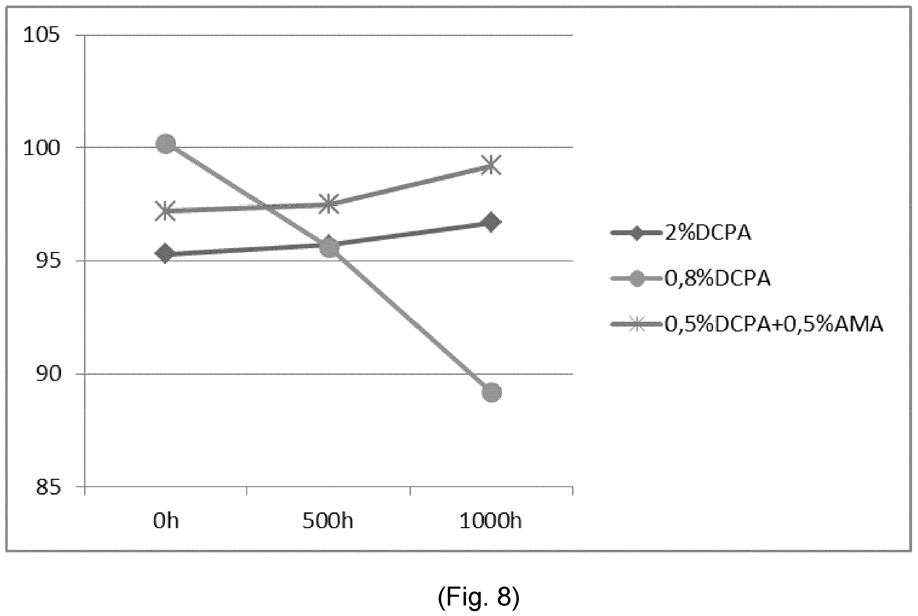

Bei einem in Analogie zu Beispiel 2 durchgeführten Experiment wurden die in Figur 8 aufgezeigten Glanz-Werte (%) nach Bewitterung (0 Stunden sowie 500 und 1000 h) für mit verschiedenen Vernetzter-Typen hergestellte ASA-Formmassen (mit kleinteiligem KAUTSCHUK-200) gefunden.
Die Zusammensetungen enthielten dabei alle eine Mischungen aus 70 Gew.-% SAN (A1) sowie 30 Gew.-% KAUTSCHUK-200.

Für diese ASA-Zusammensetzungen mit kleinteiligem Kautschuk konnten deutlich verbesserte Glanzwerte nach Bewitterung, gefunden werden, wenn eine Kombination von DCPA und AMA bei der Kautschuk-Herstellung eingesetzt wurde.

| SAN:KAUTSCHUK-200 | 2.0% DCPA | 1.0% DCPA+0.4% AMA | 0.5% DCPA+0.5% AMA |
|---|---|---|---|
| Ak -30°C | 1.5 | 1.3 | 1.4 |
| Ak 23°C | 5.2 | 6.5 | 6.2 |
| An -30°C | 61 | 73 | 69 |

## Patentansprüche

1. Thermoplastische Copolymer-Zusammensetzungen, enthaltend die folgenden Komponenten:
50-82 Gew.-% eines SAN-Copolymeren A1, aufgebaut aus:
A11 60 bis 70 Gew.-% eines ggf. substituierten Styrols,
A12 30 bis 35 Gew.-% Acrylnitril,
A13 0 bis 10 Gew. % eines weiteren, copolymerisierbaren Monomeren;
mindestens 15 Gew.-% eines Pfropfcopolymeren A2 mit einer mittleren Teilchengröße von 50 bis 150 nm, aufgebaut aus:
A21 60-80 Gew.-% mindestens einer kautschukartigen Pfropfbasis mit einer Glasübergangstemperatur Tg < 0 °C aus:
A211 80-99 Gew.-% mindestens eines C2-C4-Alkylacrylats
A212 0,5 bis 2,5 Gew.-% cyclischen Vernetzers Dicyclopentadienylacrylat (V1)
A213 0,1 bis 2,0 Gew.- % eines nicht-cyclischen, mindestens zwei funktionelle Gruppen enthaltenden weiteren Vernetzers (V2)
A214 0 bis 18 Gew.-% eines weiteren copolymerisierbaren Monomeren;
A22 20-40 Gew.-% mindestens einer Pfropfhülle, bestehend aus:
A221 71 bis 80 Gew.-% eines ggf. substituierten Styrols
A222 20 bis 29 Gew.-% Acrylnitril
A223 0 bis 9 Gew.-% eines weiteren, copolymerisierbaren Monomeren;
0-5 Gew.-% an Hilfsstoffen und/oder Zusatzstoffen C.

2. Thermoplastische Copolymer-Zusammensetzung, enthaltend die folgenden Komponenten:
50-82 Gew.-% eines SAN-Copolymeren A1, aufgebaut aus:
A11 60 bis 70 Gew.-% eines ggf. substituierten Styrols,
A12 30 bis 35 Gew.-% Acrylnitril,
A13 0 bis 10 Gew. % eines weiteren, copolymerisierbaren Monomeren;
10-35 Gew.-% eines Pfropfcopolymeren B2 mit einer mittleren Teilchengröße von 420 bis 590 nm, aufgebaut aus:
B21 60-80 Gew.-% mindestens einer kautschukartigen Pfropfbasis mit einer Glasübergangstemperatur Tg < 0 °C aus:
B211 80-99 Gew.-% mindestens eines C2-C4-Alkylacrylats B212 0,5 bis 2,5 Gew.-% cyclischen Vernetzers Dicyclopentadienylacrylat (V1)
B213 0,1 bis 2 Gew.- % eines nicht-cyclischen, mindestens zwei funktionelle Gruppen enthaltenden weiteren Vernetzers (V2)
B214 0 bis 18 Gew.-% eines weiteren copolymerisierbaren Monomeren;
B22 20-40 Gew.-% mindestens einer Pfropfhülle, bestehend aus:
B221 71 bis 80 Gew.-% eines ggf. substituierten Styrols
B222 20 bis 29 Gew.-% Acrylnitril
B223 0 bis 9 Gew.-% eines weiteren, copolymerisierbaren Monomeren;
0-5 Gew.-% an Hilfsstoffen und/oder Zusatzstoffen C.

3. Thermoplastische Copolymer-Zusammensetzung, enthaltend die folgenden Komponenten:
50-82 Gew.-% eines SAN-Copolymeren A1, aufgebaut aus 60 bis 65 Gew.-% Styrol sowie 30 bis 35 Gew.-% Acrylnitril;
10-30 Gew.-% eines Pfropfcopolymeren A2 mit einer mittleren Teilchengröße von 50 bis 150 nm, aufgebaut aus:
A21 60-80 Gew.-% mindestens einer kautschukartigen Pfropfbasis mit einer Glasübergangstemperatur Tg < 0 °C aus:
A211 bis zu 99 Gew.-% mindestens eines C4-Alkylacrylats
A212 0,5 bis 2,2 Gew.-% cyclischen Vernetzers Dicyclopentadienylacrylat (V1)
A213 0,1 bis 0,9 Gew.- % eines nicht-cyclischen, mindestens zwei funktionelle Gruppen enthaltenden weiteren Vernetzers (V2)
A214 0 bis 5 Gew.-% eines weiteren copolymerisierbaren Monomeren;
A22 20-40 Gew.-% mindestens einer Pfropfhülle, bestehend aus:
A221 71 bis 80 Gew.-% Styrol
A222 20 bis 29 Gew.-% Acrylnitril;
5-20 Gew.-% eines Pfropfcopolymeren B2 mit einer mittleren Teilchengröße von 420 bis 590 nm, aufgebaut aus:
B21 60-80 Gew.-% mindestens einer kautschukartigen Pfropfbasis mit einer Glasübergangstemperatur Tg < 0 °C aus:
B211 bis zu 99 Gew.-% mindestens eines C4-Alkylacrylats
B212 0,5 bis 2,2 Gew.-% cyclischen Vernetzers Dicyclopentadienylacrylat (V1)
B213 0,1 bis 0,9 Gew.- % eines nicht-cyclischen, mindestens zwei funktionelle Gruppen enthaltenden weiteren Vernetzers (V2) B214 0 bis 5 Gew.-% eines weiteren copolymerisierbaren Monomeren;
B22 20-40 Gew.-% mindestens einer Pfropfhülle, bestehend aus:
B221 71 bis 80 Gew.-% Styrol
B222 20 bis 29 Gew.-% Acrylnitril;
0-5 Gew.-% an Hilfsstoffen und/oder Zusatzstoffen C.

4. Thermoplastische Copolymer-Zusammensetzung nach mindestens einem der Ansprüche 1 bis 3, enthaltend mindestens ein Pfropfcopolymer A2 oder B2, hergestellt unter Einsatz des cyclischen Vernetzers Dicyclopentadienylacrylat (V1) und des nicht-cyclischen Vernetzers Allylmethacrylat (V2).

5. Thermoplastische Copolymer-Zusammensetzung nach mindestens einem der Ansprüche 1 bis 4, enthaltend mindestens ein Pfropfcopolymer A2 und mindestens ein Pfropfcopolymer B2, jeweils hergestellt unter Einsatz des cyclischen Vernetzers Dicyclopentadienylacrylat (V1) und des nicht-cyclischen Vernetzers Allylmethacrylat (V2).

6. Thermoplastische Copolymer-Zusammensetzung nach mindestens einem der Ansprüche 1 bis 5, enthaltend:
65-80 Gew.-% eines SAN-Copolymeren A1 aus Styrol und Acrylnitril;
18-25 Gew.-% eines Pfropfcopolymeren A2 mit einer mittleren Teilchengröße von 50 bis 150 nm, basierend auf einem Butylacrylat-Kautschuk;
10-15 Gew.-% eines Pfropfcopolymeren B2 mit einer mittleren Teilchengröße von 420 bis 590 nm, basierend auf einem Butylacrylat-Kautschuk;
0,5-5 Gew.-% an Hilfsstoffen und/oder Zusatzstoffen C.

7. Thermoplastische Copolymer-Zusammensetzung nach mindestens einem der Ansprüche 1 bis 5, bei der als Komponente A1 ein SAN-Copolymer mit einem Styrol-Gehalt von 65 Gew.-% und einem Acrylnitril-Gehalt von 35 Gew.-% eingesetzt wird, und das SAN-Copolymer eine mittlere Molmasse Mw von 120.000 bis 180.000 g/Mol aufweist.

8. Thermoplastische Copolymer-Zusammensetzung nach mindestens einem der Ansprüche 1 bis 7, enthaltend:
mindestens 65 Gew.-% eines SAN-Copolymeren A1 aus Styrol (65) und Acrylnitril (35);
18-22 Gew.-% eines Pfropfcopolymeren A2 mit einer mittleren Teilchengröße von 50 bis 150 nm, basierend auf einem Butylacrylat-Kautschuk, hergestellt unter Einsatz des cyclischen Vernetzers Dicyclopentadienylacrylat (V1) und des nicht-cyclischen Vernetzers Allylmethacrylat (V2);
10-15 Gew.-% eines Pfropfcopolymeren B2 mit einer mittleren Teilchengröße von 420 bis 590 nm, basierend auf einem Butylacrylat-Kautschuk und hergestellt unter Einsatz des cyclischen Vernetzers Dicyclopentadienylacrylat (V1) und des nicht-cyclischen Vernetzers Allylmethacrylat (V2);
0,5-5 Gew.-% an Hilfsstoffen und/oder Zusatzstoffen C,
wobei sich der Acrylnitril-Gehalt des SAN-Copolymeren A1 einerseits und der Acrylnitril-Gehalt der SAN-Pfropfhüllen der Pfropfkomponenten A2 und B2 andererseits um mindestens 5 Gew.-% im Acrylnitril-Gehalt unterscheiden.

9. Thermoplastische Copolymer-Zusammensetzung nach mindestens einem der Ansprüche 1 bis 8, enthaltend:
mindestens 65 Gew.-% eines SAN-Copolymeren A1 aus Styrol (65) und Acrylnitril (35);
18-22 Gew.-% eines ASA-Pfropfcopolymeren A2 mit einer mittleren Teilchengröße von 50 bis 150 nm, insbesondere 80 bis 115 nm, basierend auf einem Butylacrylat-Kautschuk, hergestellt unter Einsatz von 0,5-2,2 Gew.-% des cyclischen Vernetzers Dicyclopentadienylacrylat und von 0,1-0,9 Gew.-% des nicht-cyclischen Vernetzers Allylmethacrylat;
10-15 Gew.-% eines ASA-Pfropfcopolymeren B2 mit einer mittleren Teilchengröße von 450 bis 550 nm, basierend auf einem Butylacrylat-Kautschuk und hergestellt unter Einsatz von 0,5-2,2 Gew.-% des cyclischen Vernetzers Dicyclopentadienylacrylat und von 0,1-0,9 Gew.-% des nicht-cyclischen Vernetzers Allylmethacrylat;
1-5 Gew.-% an Hilfsstoffen und/oder Zusatzstoffen C.

10. Verfahren zur Herstellung einer thermoplastische Copolymer-Zusammensetzung nach mindestens einem der Ansprüche 1 bis 9, bei dem man mindestens ein SAN-Copolymer A1, bestehend aus einem ggf. substituierten Styrol und Acrylnitril, sowie mindestens ein Pfropfcopolymer A2 und/oder B2 mit definierter Pfropfbasis-Pfropfhülle-Morphologie herstellt, und diese Komponenten ggf. mit den weiteren Hilfsstoffen und/oder Zusatzstoffen C vermischt.

11. Verfahren zur Herstellung einer thermoplastische Copolymer-Zusammensetzung nach Anspruch 10, bei dem man mindestens ein SAN-Copolymer A1, bestehend aus 60-65 Gew.-% eines ggf. substituierten Styrols und 30-35 Gew.-% Acrylnitril, sowie mindestens ein Pfropfcopolymer A2 und/oder B2 herstellt und diese Komponenten ggf. mit den weiteren Hilfsstoffen und/oder Zusatzstoffen C vermischt, wobei das bzw. die Pfropfcopolymere A2 und/oder B2 hergestellt werden aus:
a) 60-80 Gew.-% einer Pfropfbasis aus einem Material mit einer Glasübergangstemperatur Tg von kleiner 0°C, aufgebaut aus 80-99 Gew.-% mindestens eines C2-C4-Alkylacrylats, 0,5 bis 2,5 Gew.-% des cyclischen Vernetzers Dicyclopentadienylacrylat (V1) und 0,1 bis 2 Gew.- % eines nicht-cyclischen, mindestens zwei funktionelle Gruppen enthaltenden weiteren Vernetzers (V2),
b) 20-40 Gew.-% einer Pfropfhülle bestehend aus 71 bis 80 Gew.-% eines ggf. substituierten Styrols, 20 bis 29 Gew.-% Acrylnitril.

12. Verwendung der thermoplastischen Zusammensetzung gemäß einem der Ansprüche 1 bis 9 zur Herstellung von Formkörpern, Folien, Fasern oder Beschichtungen.

13. Verwendung der thermoplastischen Zusammensetzung gemäß Anspruch 12 zur Herstellung von Formkörpern oder Beschichtungen für Außenanwendungen.

14. Formkörper, Folien, Fasern oder Beschichtungen, enthaltend eine thermoplastische Zusammensetzung gemäß einem der Ansprüche 1 bis 9.

## Claims

1. A thermoplastic copolymer composition comprising the following components:
50-82% by weight of an SAN copolymer A1, formed from:
A11 60 to 70% by weight of an optionally substituted styrene,
A12 30 to 35% by weight of acrylonitrile,
A13 0 to 10% by weight of a further copolymerizable monomer;
at least 15% by weight of a graft copolymer A2 having a mean particle size of 50 to 150 nm, formed from:
A21 60-80% by weight of at least one rubber-like graft base having a glass transition temperature Tg < 0°C:
A211 80-99% by weight of at least one C2-C4-alkyl acrylate
A212 0.5 to 2.5% by weight of cyclic dicyclopentadienyl acrylate crosslinker (C1)
A213 0.1 to 2.0% by weight of an acyclic further crosslinker (C2) comprising at least two functional groups
A214 0 to 18% by weight of a further copolymerizable monomer;
A22 20-40% by weight of at least one graft shell consisting of:
A221 71 to 80% by weight of an optionally substituted styrene
A222 20 to 29% by weight of acrylonitrile
A223 0 to 9% by weight of a further copolymerizable monomer;
0-5% by weight of assistants and/or additives C.

2. A thermoplastic copolymer composition comprising the following components:
50-82% by weight of an SAN copolymer A1, formed from:
A11 60 to 70% by weight of an optionally substituted styrene,
A12 30 to 35% by weight of acrylonitrile,
A13 0 to 10% by weight of a further copolymerizable monomer;
10-35% by weight of a graft copolymer B2 having a mean particle size of 420 to 590 nm, formed from:
B21 60-80% by weight of at least one rubber-like graft base having a glass transition temperature Tg < 0°C:
B211 80-99% by weight of at least one C2-C4-alkyl acrylate
B212 0.5 to 2.5% by weight of cyclic dicyclopentadienyl acrylate crosslinker (C1)
B213 0.1 to 2% by weight of an acyclic further crosslinker (C2) comprising at least two functional groups
B214 0 to 18% by weight of a further copolymerizable monomer;
B22 20-40% by weight of at least one graft shell consisting of:
B221 71 to 80% by weight of an optionally substituted styrene
B222 20 to 29% by weight of acrylonitrile
B223 0 to 9% by weight of a further copolymerizable monomer;
0-5% by weight of assistants and/or additives C.

3. A thermoplastic copolymer composition comprising the following components:
50-82% by weight of an SAN copolymer A1 formed from 60 to 65% by weight of styrene and 30 to 35% by weight of acrylonitrile;
10-30% by weight of a graft copolymer A2 having a mean particle size of 50 to 150 nm, formed from:
A21 60-80% by weight of at least one rubber-like graft base having a glass transition temperature Tg < 0°C:
A211 up to 99% by weight of at least one C4-alkyl acrylate
A212 0.5 to 2.2% by weight of cyclic dicyclopentadienyl acrylate crosslinker (C1)
A213 0.1 to 0.9% by weight of an acyclic further crosslinker (C2) comprising at least two functional groups
A214 0 to 5% by weight of a further copolymerizable monomer;
A22 20-40% by weight of at least one graft shell consisting of:
A221 71 to 80% by weight of styrene
A222 20 to 29% by weight of acrylonitrile;
5-20% by weight of a graft copolymer B2 having a mean particle size of 420 to 590 nm, formed from:
B21 60-80% by weight of at least one rubber-like graft base having a glass transition temperature Tg < 0°C:
B211 up to 99% by weight of at least one C4-alkyl acrylate
B212 0.5 to 2.2% by weight of cyclic dicyclopentadienyl acrylate crosslinker (C1)
B213 0.1 to 0.9% by weight of an acyclic further crosslinker (C2) comprising at least two functional groups
B214 0 to 5% by weight of a further copolymerizable monomer;
B22 20-40% by weight of at least one graft shell consisting of:
B221 71 to 80% by weight of styrene
B222 20 to 29% by weight of acrylonitrile;
0-5% by weight of assistants and/or additives C.

4. The thermoplastic copolymer composition as claimed in at least one of claims 1 to 3, comprising at least one graft copolymer A2 or B2, prepared using the cyclic crosslinker dicyclopentadienyl acrylate (C1) and the acyclic crosslinker allyl methacrylate (C2).

5. The thermoplastic copolymer composition as claimed in at least one of claims 1 to 4, comprising at least one graft copolymer A2 and at least one graft copolymer B2, each prepared using the cyclic crosslinker dicyclopentadienyl acrylate (C1) and the acyclic crosslinker allyl methacrylate (C2).

6. The thermoplastic copolymer composition as claimed in at least one of claims 1 to 5, comprising:
65-80% by weight of an SAN copolymer A1 of styrene and acrylonitrile;
18-25% by weight of a graft copolymer A2 having a mean particle size of 50 to 150 nm, based on a butyl acrylate rubber;
10-15% by weight of a graft copolymer B2 having a mean particle size of 420 to 590 nm, based a butyl acrylate rubber;
0.5-5% by weight of assistants and/or additives C.

7. The thermoplastic copolymer composition as claimed in at least one of claims 1 to 5, in which an SAN copolymer having a styrene content of 65% by weight and an acrylonitrile content of 35% by weight is used as component A1, and the SAN copolymer has a mean molar mass Mw of 120 000 to 180 000 g/mol.

8. The thermoplastic copolymer composition as claimed in at least one of claims 1 to 7, comprising:
at least 65% by weight of an SAN copolymer A1 of styrene (65) and acrylonitrile (35);
18-22% by weight of a graft copolymer A2 having a mean particle size of 50 to 150 nm, based on a butyl acrylate rubber, prepared using the cyclic crosslinker dicyclopentadienyl acrylate (C1) and the acyclic crosslinker allyl methacrylate (C2);
10-15% by weight of a graft copolymer B2 having a mean particle size of 420 to 590 nm, based on a butyl acrylate rubber and prepared using the cyclic crosslinker dicyclopentadienyl acrylate (C1) and the acyclic crosslinker allyl methacrylate (C2);
0.5-5% by weight of assistants and/or additives C,
where the acrylonitrile content of the SAN copolymer A1 on the one hand and the acrylonitrile content of the SAN graft shells of the graft components A2 and B2 on the other hand differ in acrylonitrile content by at least 5% by weight.

9. The thermoplastic copolymer composition as claimed in at least one of claims 1 to 8, comprising:
at least 65% by weight of an SAN copolymer A1 of styrene (65) and acrylonitrile (35);
18-22% by weight of an ASA graft copolymer A2 having a mean particle size of 50 to 150 nm, especially 80 to 115 nm, based on a butyl acrylate rubber prepared using 0.5-2.2% by weight of the cyclic crosslinker dicyclopentadienyl acrylate and 0.1-0.9% by weight of the acyclic crosslinker allyl methacrylate;
10-15% by weight of an ASA graft copolymer B2 having a mean particle size of 450 to 550 nm, based on a butyl acrylate rubber and prepared using 0.5-2.2% by weight of the cyclic crosslinker dicyclopentadienyl acrylate and 0.1-0.9% by weight of the acyclic crosslinker allyl methacrylate;
1-5% by weight of assistants and/or additives C.

10. A process for preparing a thermoplastic copolymer composition as claimed in at least one of claims 1 to 9, in which at least one SAN copolymer A1 consisting of an optionally substituted styrene and acrylonitrile, and at least one graft copolymer A2 and/or B2 with defined graft base-graft shell morphology is prepared, and these components are optionally mixed with the further assistants and/or additives C.

11. The process for preparing a thermoplastic copolymer composition according to claim 10, in which at least one SAN copolymer A1, consisting of 60-65% by weight of an optionally substituted styrene and 30-35% by weight of acrylonitrile, and at least one graft copolymer A2 and/or B2 is prepared, and these components are optionally mixed with the further assistants and/or additives C, where the graft copolymer(s) A2 and/or B2 are prepared from:
a) 60-80% by weight of a graft base composed of a material having a glass transition temperature Tg of less than 0°C, formed from 80-99% by weight of at least one C2-C4-alkyl acrylate, 0.5 to 2.5% by weight of the cyclic crosslinker dicyclopentadienyl acrylate (C1) and 0.1 to 2% by weight of an acyclic further crosslinker (C2) comprising at least two functional groups,
b) 20-40% by weight of a graft shell consisting of 71 to 80% by weight of an optionally substituted styrene, 20 to 29% by weight of acrylonitrile.

12. The use of the thermoplastic composition as claimed in any of claims 1 to 9 for production of moldings, films, fibres or coatings.

13. The use of the thermoplastic composition according to claim 12 for production of moldings or coatings for exterior applications.

14. A molding, film, fiber or coating comprising a thermoplastic composition as claimed in any of claims 1 to 9.

## Revendications

1. Compositions de copolymères thermoplastiques, contenant les composants suivants :
- 50 à 82% en poids d'un copolymère SAN A1, constitué de :
A11 60 à 70% en poids d'un styrène éventuellement substitué,
A12 30 à 35% en poids d'acrylonitrile,
A13 0 à 10% en poids d'un monomère copolymérisable supplémentaire ;
- au moins 15% en poids d'un copolymère greffé A2 ayant une granulométrie moyenne de 50 à 150 nm, constitué de :
A21 60 à 80% en poids d'au moins une base de greffage de type caoutchouc, dont la température de transition vitreuse est Tg < 0°C, constitué de :
A211 80 à 99% en poids d'au moins un acrylate d'alkyle en C2-C4,
A212 0,5 à 2,5% en poids d'un agent de réticulation cyclique consistant en acrylate de dicyclopentadiényle (V1),
A213 0,1 à 2,0% en poids d'un agent de réticulation supplémentaire (V2) non cyclique, contenant au moins deux groupes fonctionnels,
A214 0 à 18% en poids d'un monomère copolymérisable supplémentaire ;
A22 20 à 40% en poids d'au moins une enveloppe de greffage constituée de :
A221 71 à 80% en poids d'un styrène éventuellement substitué,
A222 20 à 29% en poids d'acrylonitrile,
A223 0 à 9% en poids d'un monomère copolymérisable supplémentaire ;
- 0 à 5% en poids d'adjuvants et/ou d'additifs C.

2. Compositions de copolymères thermoplastiques, contenant les composants suivants :
- 50 à 82% en poids d'un copolymère SAN A1, constitué de :
A11 60 à 70% en poids d'un styrène éventuellement substitué,
A12 30 à 35% en poids d'acrylonitrile,
A13 0 à 10% en poids d'un monomère copolymérisable supplémentaire ;
- 10 à 35% en poids d'un copolymère greffé B2 présentant une granulométrie moyenne de 420 à 590 nm, constitué de :
B21 60 à 80% en poids d'au moins une base de greffage de type caoutchouc, ayant une température de transition vitreuse Tg < 0 °C, constitué de :
B211 80 à 99% en poids d'au moins un acrylate d'alkyl en C₂-C₄,
B212 0,5 à 2,5% en poids de l'agent de réticulation cyclique consistant en acrylate de dicyclopentadiényle (V1),
B213 0,1 à 2% en poids d'un agent de réticulation supplémentaire (V2) non cyclique, contenant au moins deux groupes fonctionnels,
B214 0 à 18% en poids d'un monomère copolymérisable supplémentaire ;
B22 20 à 40% en poids d'au moins une enveloppe de greffage constituée de :
B221 71 à 80% en poids d'un styrène éventuellement substitué,
B222 20 à 29% en poids d'acrylonitrile,
B223 0 à 9% en poids d'un autre monomère copolymérisable;
- 0 à 5% en poids d'adjuvants et/ou d'additifs C.

3. Compositions de copolymères thermoplastiques, contenant les composants suivants :
- 50 à 82% en poids d'un copolymère SAN A1, constitué de 60 à 65% en poids de styrène, ainsi que de 30 à 35% en poids d'acrylonitrile ;
- 10 à 30% en poids d'un copolymère greffé A2 ayant une granulométrie moyenne de 50 à 150 nm, constitué de :
A21 60 à 80% en poids d'au moins une base de greffage de type caoutchouc ayant une température de transition vitreuse Tg < 0 °C, constituée de :
A211 jusqu'à 99% en poids d'au moins un acrylate d'alkyle en C₄,
A212 0,5 à 2,2% en poids d'un agent de réticulation cyclique consistant en acrylate de dicyclopentadiényle (V1),
A213 0,1 à 0,9% en poids d'un agent de réticulation supplémentaire (V2), non cyclique, contenant au moins deux groupes fonctionnels,
A214 0 à 5% en poids d'un autre monomère copolymérisable ;
A22 20 à 40% en poids d'au moins une enveloppe de greffage constituée de :
A221 71 à 80% en poids de styrène,
A222 20 à 29% en poids d'acrylonitrile ;
- 5 à 20% en poids d'un copolymère greffé B2 ayant une granulométrie moyenne de 420 à 590 nm, constitué de :
B21 60 à 80% en poids d'au moins une base de greffage de type caoutchouc ayant une température de transition vitreuse Tg < 0 °C, constituée de :
B211 jusqu'à 99% en poids d'au moins un acrylate d'alkyle en C4,
B212 0,5 à 2,2% en poids d'un agent de réticulation cyclique consistant en acrylate de dicyclopentadiényle (V1),
B213 0,1 à 0,9% en poids d'un agent de réticulation supplémentaire (V2), non cyclique, contenant au moins deux groupes fonctionnels,
B214 0 à 5% en poids d'un monomère copolymérisable supplémentaire ;
B22 20 à 40% en poids d'au moins une enveloppe de greffage constituée de :
B221 71 à 80% en poids de styrène,
B222 20 à 29% en poids d'acrylonitrile ;
- 0 à 5% en poids d'adjuvants et/ou d'additifs C.

4. Compositions de copolymères thermoplastiques selon au moins l'une des revendications 1 à 3, contenant au moins un copolymère greffé A2 ou B2, obtenu par utilisation de l'agent de réticulation consistant en acrylate de dicyclopentadiényle (V1) et de l'agent de réticulation non cyclique consistant en méthacrylate d'allyle (V2).

5. Compositions de copolymères thermoplastiques selon au moins l'une des revendications 1 à 4, contenant au moins un copolymère greffé A2 et au moins un copolymère greffé B2, obtenus chacun par utilisation de l'agent de réticulation cyclique consistant en acrylate de dicyclopentadiényle (V1) et de l'agent de réticulation non cyclique consistant en méthacrylate d'allyle (V2).

6. Compositions de copolymères thermoplastiques selon au moins l'une des revendications 1 à 5, contenant :
- 65 à 80% en poids d'un copolymère SAN A1 constitué de styrène et d'acrylonitrile ;
- 18 à 25% en poids d'un copolymère greffé A2 ayant une granulométrie moyenne de 50 à 150 nm, à base d'un caoutchouc-acrylate de butyle ;
- 10 à 15% en poids d'un copolymère greffé B2 ayant une granulométrie moyenne de 420 à 590 nm, à base d'un caoutchouc-acrylate de butyle ;
- 0,5 à 5% en poids d'adjuvants et/ou d'additifs C.

7. Compositions de copolymères thermoplastiques selon au moins l'une des revendications 1 à 5, dans lesquelles on utilise en tant que composé A1 un copolymère SAN ayant une teneur en styrène de 65% en poids et une teneur en acrylonitrile de 35% en poids, et dans laquelle le copolymère SAN présente une masse moléculaire moyenne Mw de 120 000 à 180 000 g/mol.

8. Compositions de copolymères thermoplastiques selon au moins l'une des revendications 1 à 7, contenant :
- au moins 65% en poids d'un copolymère SAN A1 constitué de styrène (65) et d'acrylonitrile (35) ;
- 18 à 22% en poids d'un copolymère greffé A2 ayant une granulométrie moyenne de 50 à 150 nm, à base d'un caoutchouc-acrylate de butyle, obtenu par utilisation de l'agent de réticulation cyclique consistant en acrylate de dicyclopentadiényle (V1) et de l'agent de réticulation non cyclique consistant en méthacrylate d'allyle (V2)
- 10 à 15% en poids d'un copolymère greffé B2 ayant une granulométrie moyenne de 420 à 590 nm, à base d'un caoutchouc-acrylate de butyle et obtenu par utilisation de l'agent de réticulation cyclique consistant en acrylate de dicyclopentadiényle (V1) et de l'agent de réticulation non cyclique consistant en méthacrylate d'allyle (V2).
- 0,5 à 5% en poids d'adjuvants et/ou d'additifs C,
dans laquelle la teneur en acrylonitrile du copolymère SAN A1 d'une part et la teneur en acrylonitrile des enveloppes de greffage SAN des composants greffés A2 et B2 d'autre part, différent d'au moins 5% en poids pour ce qui est de la teneur en acrylonitrile.

9. Compositions de copolymères thermoplastiques selon au moins l'une des revendications 1 à 8, contenant :
- au moins 65% en poids d'un copolymère SAN A1 constitué de styrène (65) et d'acrylonitrile (35) ;
- 18 à 22% en poids d'un copolymère greffé ASA A2 ayant une granulométrie moyenne de 50 à 150 nm, en particulier de 80 à 115 nm, à base d'un caoutchouc-acrylate de butyle, obtenu par utilisation de 0,5 à 2,2% en poids de l'agent de réticulation cyclique consistant en acrylate de dicyclopentadiényle et de 0,1 à 0,9% en poids de l'agent de réticulation non cyclique consistant en méthacrylate d'allyle ;
- 10 à 15% en poids d'un copolymère greffé ASA B2 ayant une granulométrie moyenne de 450 à 550 nm, à base d'un caoutchouc-acrylate de butyle et obtenu par utilisation de 0,5 à 2,2% en poids de l'agent de réticulation cyclique consistant en acrylate de dicyclopentadiényle et de 0,1 à 0,9% en poids de l'agent de réticulation non cyclique consistant en méthacrylate d'allyle ;
- 1 à 5% en poids d'adjuvants et/ou d'additifs C.

10. Procédé pour obtenir une composition de copolymères thermoplastiques selon au moins l'une des revendications 1 à 9, dans lequel on prépare un copolymère SAN A1 constitué d'un styrène éventuellement substitué et d'acrylonitrile, ainsi que d'au moins un copolymère greffé A2 et/ou B2 ayant une morphologie base de greffage-enveloppe de greffage parfaitement définie, et on mélange ces composants éventuellement avec les adjuvants et/ou additifs supplémentaires C.

11. Procédé pour obtenir une composition de copolymères thermoplastiques selon la revendication 10, dans lequel on prépare au moins un copolymère SAN A1 constitué de 60 à 65% en poids d'un styrène éventuellement substitué et de 30 à 35% en poids d'acrylonitrile, ainsi que d'au moins un copolymère greffé A2 et/ou B2, et on mélange ces composants éventuellement à des adjuvants et/ou additifs supplémentaires C, procédé dans lequel le ou les copolymères greffés A2 et/ou B2 ont été obtenus à partir de :
a) 60 à 80% en poids d'une base de greffage constituée d'un matériau ayant une température de transition vitreuse Tg inférieure à 0 °C, constitué de 80 à 99% en poids d'au moins un acrylate d'alkyle en C₂-C₄, de 0,5 à 2,5% en poids de l'agent de réticulation cyclique consistant en acrylate de dicyclopentadiényle (V1) et de 0,1 à 2% en poids d'un agent de réticulation supplémentaire (V2) non cyclique, contenant au moins deux groupes fonctionnels,
b) 20 à 40% en poids d'une enveloppe de greffage consistant en 71 à 80% en poids d'un styrène éventuellement substitué et de 20 à 29% en poids d'acrylonitrile.

12. Utilisation de la composition thermoplastique selon l'une des revendications 1 à 9, pour la préparation d'objets moulés, de feuilles, de fibres ou de revêtements.

13. Utilisation de la composition thermoplastique selon la revendication 12 pour la préparation d'objets moulés ou de revêtements pour des applications en extérieur.

14. Objets moulés, feuilles, fibres ou revêtements, contenant une composition thermoplastique selon l'une des revendications 1 à 9.
